(19) Europäisches Patentamt / European Patent Office / Office européen des brevets

(11) **EP 4 301 639 B1**

(12) **EUROPÄISCHE PATENTSCHRIFT**

(45) Veröffentlichungstag und Bekanntmachung des Hinweises auf die Patenterteilung:
**08.04.2026 Patentblatt 2026/15**

(21) Anmeldenummer: **22708513.1**

(22) Anmeldetag: **14.02.2022**

(51) Internationale Patentklassifikation (IPC):
**B60T 8/17** *(2006.01)* **B60T 8/18** *(2006.01)*
**B60T 8/32** *(2006.01)* **B60T 17/20** *(2006.01)*
**B60T 17/22** *(2006.01)*

(52) Gemeinsame Patentklassifikation (CPC):
**B60T 8/1705; B60T 8/1893; B60T 8/3245;**
**B60T 17/20; B60T 17/228**

(86) Internationale Anmeldenummer:
**PCT/EP2022/053546**

(87) Internationale Veröffentlichungsnummer:
**WO 2022/184410 (09.09.2022 Gazette 2022/36)**

(54) **VERFAHREN UND VORRICHTUNG ZUR ÜBERWACHUNG UND BEEINFLUSSUNG DES THERMISCHEN ZUSTANDS EINES REIBUNGSBREMSSYSTEMS EINES SCHIENENFAHRZEUGS**

METHOD AND DEVICE FOR MONITORING AND INFLUENCING THE THERMAL STATE OF A FRICTION BRAKE SYSTEM OF A RAIL VEHICLE

PROCÉDÉ ET DISPOSITIF DE SURVEILLANCE ET D'INFLUENCE DE L'ÉTAT THERMIQUE D'UN SYSTÈME DE FREIN À FRICTION D'UN VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.03.2021 DE 102021104799**

(43) Veröffentlichungstag der Anmeldung:
**10.01.2024 Patentblatt 2024/02**

(73) Patentinhaber: **KNORR-BREMSE Systeme für Schienenfahrzeuge GmbH 80809 München (DE)**

(72) Erfinder:
- **FRIESEN, Ulf**
  **85579 Neubiberg (DE)**
- **FURTWÄNGLER, Ralf**
  **81379 München (DE)**
- **HAUSS, Fabian**
  **85276 Pfaffenhofen (DE)**
- **MACHANE, Werner**
  **85276 Pfaffenhofen (DE)**
- **STAHLBAUER, Gerhard**
  **80804 München (DE)**

(56) Entgegenhaltungen:
WO-A1-2009/074265    WO-A1-92/00212
US-A1- 2014 046 514    US-B2- 9 187 103

**Beschreibung**

Die Erfindung betrifft ein Verfahren und eine Vorrichtung zur Überwachung und Beeinflussung des thermischen Zustands eines Reibungsbremssystems eines Schienenfahrzeugs, gemäß dem Oberbegriff der Ansprüche 1 und 10. Die Erfindung betrifft auch ein Schienenfahrzeug mit einer solchen Vorrichtung gemäß Anspruch 21.

Schienenfahrzeuge weisen oft ein elektrodynamisches Bremssystem und zusätzlich ein Reibungsbremssystem auf, welche nach bestimmten Kriterien zusammenwirken (Blending), wobei die elektrodynamischen Bremsen vorrangig zum Einsatz kommen, um den Verschleiß des Reibungsbremssystems zu reduzieren. Manche Schienenfahrzeuge weisen zwar ein Reibungsbremssystem, aber keine elektrodynamischen Bremsen auf. Daher kann es bei einem kompletten oder teilweisen Ausfall der elektrodynamischen Bremsen vorkommen, dass eine Bremsung, insbesondere eine Betriebsbremsung, hauptsächlich oder ausschließlich mit dem Reibungsbremssystem durchgeführt werden muss. Je höher das Fahrzeuggewicht, welches vom Reibungsbremssystem abgebremst wird, und die Bremseintrittsgeschwindigkeit des Schienenfahrzeugs ist, d.h. je höher die Geschwindigkeit ist, bei welcher mit der Reibungsbremsung begonnen wird, desto höher ist der Energieeintrag und damit die Temperaturerhöhung der Bremsscheiben und Bremsbeläge. Als Konsequenz erhöht sich die Schwankung des Reibbeiwerts $\mu$ der Bremsscheibe-Bremsbelag-Paarung und damit die Wahrscheinlichkeit, dass sich der Reibbeiwert $\mu$ verringert. Bei hohen Bremseintrittsgeschwindigkeiten besteht daher die Gefahr, dass aufgrund von Bremsfading sich die Bremswege verlängern. Unter Bremsfading (Bremsschwund) versteht man hierbei das Nachlassen der Bremswirkung eines Reibungsbremssystems durch Einflüsse wie Erwärmung oder Nässe. Um Bremsfading wegen Erwärmung zu vermeiden, wird die maximale Geschwindigkeit des Schienenfahrzeugs situationsbedingt limitiert durch eine maximal erlaubte Geschwindigkeit.

Gemäß WO 2009/074265 A1 wird ein Verfahren zur Antriebs- und Bremskraftkontrolle eines Fahrzeugs beschrieben, bei dem anhand von vorgegebenen maximal zulässigen Temperaturänderungen für Rad und Schiene, die maximal zulässigen Temperaturänderungen entsprechen, unter denen gerade noch keine Beschädigung des Rads bzw. der Schiene stattfinden soll, Soll-Reibleistungen zu bilden und dann aus den Soll-Reibleistungen einen Soll-Radschlupf zu bestimmen, aus welchem wiederum eine Soll-Bremskraft ermittelt wird, die dann zur Steuerung oder Regelung der Bremskraft herangezogen wird. Mit diesen Maßnahmen soll der zur Verfügung stehende schlupfabhängige Kraftschluss erhöht werden

Die gattungsgemäße WO 2018/054736 A1 schlägt ein Verfahren und eine Vorrichtung zur Beeinflussung eines kinematischen Verhaltens eines Fahrzeugs vor, mit zumindest einem Reibungsbremssystem, bei dem eine Bremswirkung durch ein Gegeneinanderdrücken zumindest eines ersten Reibelements und eines zweiten Reibelements erzeugt wird, wobei zumindest aus Informationen über eine Geschwindigkeit, einen Bremsdruck und eine Außentemperatur des Fahrzeugs sowie über Absolut-Zeiten zumindest Temperaturen zumindest des ersten Reibelements berechnet werden, und wobei bei dieser Berechnung eine Wärmeleitung durch das zumindest erste Reibelement sowie eine geschwindigkeitsabhängige Abkühlung des zumindest ersten Reibelements berücksichtigt werden, und wobei eine Beeinflussung des kinematischen Verhaltens des Fahrzeugs auf Basis dieser Berechnung erfolgt.

Der vorliegenden Erfindung liegt die Aufgabe zugrunde, ein Verfahren und eine Vorrichtung zur Verfügung zu stellen, welches einerseits eine höhere Sicherheit gegenüber einer Überhitzung des Reibungsbremssystems bietet, aber andererseits eine möglichst hohe Geschwindigkeit des Schienenfahrzeugs, also ein Fahren "am Limit", ermöglicht. Ebenso soll ein Schienenfahrzeug mit einer solchen Vorrichtung zur Verfügung gestellt werden.

Diese Aufgabe wird erfindungsgemäß durch die Merkmale der Ansprüche 1, 10 und 21 gelöst.

Offenbarung der Erfindung

Hintergrund der erfinderischen Überlegungen ist, dass im Betrieb bzw. unter Fahrt des Schienenfahrzeugs jederzeit gewährleistet sein soll, dass eine definierte Bremsart mit einer definierten Bremswirkung wie z.B. eine Not-, Zwangs- bzw. Schnellbremsung durchgeführt werden kann, ohne dass durch den dadurch erzeugten Temperaturhub dT die Reibelement-Temperatur (z.B. Bremsscheibentemperatur) in einen kritischen Bereich gelangt. Aus diesem Grund wird bei der vorzugsweise während der Fahrt insbesondere ständig durchgeführten Berechnung bzw. Schätzung des ersten Temperaturanteils $T_{current}$ der prädiktiven Reibelement-Temperatur $T_{pred}$ stets, ständig oder zeitweise auch der durch eine definierte Bremsart wie beispielsweise eine Not-, Zwangs- bzw. Schnellbremsung verursachte Temperaturhub dT als zweiter Temperaturanteil der prädiktiven Reibelement-Temperatur $T_{pred}$ zusätzlich berechnet, bestimmt oder geschätzt und dann bei der Überwachung und Beeinflussung des thermischen Zustands des Reibungsbremssystems berücksichtigt. Abhängig von der prädiktiven Reibelement-Temperatur $T_{pred}$, also der Summe aus dem ersten Temperaturanteil $T_{current}$ und dem zweiten, aufgrund einer theoretischen oder fiktiven Ausführung der definierten Bremsart berechneten oder geschätzten zweiten Temperaturanteil dT wird dann der thermische Zustand des Reibungsbremssystems des Schienenfahrzeugs überwacht und beeinflusst.

Die Beeinflussung des thermischen Zustands kann dabei direkt, nämlich durch ein Beeinflussungssignal, oder auch indirekt erfolgen, beispielsweise durch einen Fahrer oder Zugführer des Schienenfahrzeugs auf ein entsprechendes Hinweissignal oder Warnsignal hin, indem beispielsweise bei einer drohenden (potentiellen) Überhitzung des Reibungsbremssystems die Geschwindigkeit und/oder die Verzögerung des Schienenfahrzeugs reduziert wird (werden), um die mögliche thermische Belastung des Reibungsbremssystems zu senken. Die Beeinflussung des thermischen Zustands des Reibungsbremssystems erfolgt daher bevorzugt durch eine Anpassung oder Änderung der Geschwindigkeit und/oder der Verzögerung des Schienenfahrzeugs.

Die Erfindung geht gemäß einem ersten Aspekt aus von einem Verfahren zur Überwachung und Beeinflussung des thermischen Zustands eines Reibungsbremssystems eines Schienenfahrzeugs abhängig von einer berechneten oder geschätzten prädiktiven Reibelement-Temperatur $T_{pred}$ wenigstens eines Reibelements des Reibungsbremssystems, beinhaltend wenigstens die folgenden Schritte:

a) Erfassen von wenigstens einem Parameter, welche eine aktuelle Fahrbetriebssituation des Schienenfahrzeugs charakterisiert,

b) Berechnen, Schätzen oder Bestimmen eines ersten Temperaturanteils $T_{current}$ der prädiktiven Reibelement-Temperatur $T_{pred}$ auf der Basis der aktuellen Fahrbetriebssituation des Schienenfahrzeugs und Berücksichtigung des ersten Temperaturanteils $T_{current}$ bei der Überwachung und Beeinflussung des thermischen Zustands des Reibungsbremssystems.

Vorzugsweise ist der Parameter und/oder die Kenngröße zur Charakterisierung der aktuellen Fahrsituation keine Temperaturgröße, d.h., dass der erste Temperaturanteil vorzugsweise nicht von einem Temperatursensor gemessen wird. Beispielsweise wird der erste Temperaturanteil $T_{current}$ der prädiktiven Reibelement-Temperatur $T_{pred}$ mittels eines Modells aus dem wenigstens einen Parameter geschätzt oder berechnet.

Alternativ kann auch wenigstens ein Temperatursensor zur (direkten) Erfassung des ersten Temperaturanteils herangezogen werden.

Unter einem Schienenfahrzeug soll hier jegliche Art von spurgebundenem Fahrzeug mit Antriebsmaschine, insbesondere Triebfahrzeuge oder auch ohne Antriebsmaschine wie

Wagen in Schienenfahrzeugverbänden sowie ein Schienenfahrzeugverband aus mehreren Schienenfahrzeugen verstanden werden.

Erfindungsgemäß ist bei dem ersten Aspekt vorgesehen, dass

c) bei der Überwachung und Beeinflussung des thermischen Zustands des Reibungsbremssystems zusätzlich ein zweiter Temperaturanteil dT der prädiktiven Reibelement-Temperatur $T_{pred}$ berücksichtigt wird, welcher sich zusätzlich zu dem ersten Temperaturanteil $T_{current}$ an dem wenigstens einen Reibelement unter der Annahme einstellen würde, dass in der aktuellen Fahrbetriebssituation des Schienenfahrzeugs (zusätzlich) eine Bremsung mit einer definierten Bremsart fiktiv oder theoretisch durchgeführt wird, und dass

d) die prädiktive Reibelement-Temperatur $T_{pred}$ des wenigstens einen Reibelements als Summe aus dem ersten Temperaturanteil $T_{current}$ und dem zweiten Temperaturanteil dT bestimmt wird, und dass

e) falls die prädiktive Reibelement-Temperatur $T_{pred}$ größer als die erlaubte Reibelement-Maximaltemperatur $T_{max}$ des wenigstens einen Reibelements ist ein erstes Signal erzeugt wird, welches einen potenziell thermisch kritischen Zustand des wenigstens einen Reibelements repräsentiert, und andernfalls kein erstes Signal erzeugt wird.

Eine Erzeugung des ersten Signals weist daher auf einen potentiell kritischen thermischen Zustand des wenigstens einen Reibelements hin. Potentiell kritisch, weil die Voraussetzung die Annahme bildet, dass in der aktuellen Fahrbetriebssituation eine Bremsung mit der definierten Bremsart lediglich fiktiv oder theoretisch durchgeführt wird. Bei einer Erzeugung des ersten Signals ist daher das "thermische Belastungspotenzial" des wenigstens einen Reibelements des Reibungsbremssystems potentiell erschöpft.

Im anderen Fall, d.h., falls die prädiktive Reibelement-Temperatur $T_{pred}$ kleiner oder gleich in Bezug auf die erlaubte Reibelement-Maximaltemperatur $T_{max}$ des wenigstens einen Reibelements ist, wird kein erstes Signal erzeugt oder eine Erzeugung des ersten Signals unterdrückt, weil sich dann herausgestellt hat, dass kein potentiell kritischer thermischer Zustand des wenigstens einen Reibelements vorliegt.

Eine Erzeugung des ersten Signals kann auch gleichbedeutend sein mit einer Unterdrückung eines Signals, welches insbesondere als voreingestelltes Signal auf einen unkritischen thermischen Zustand des wenigstens einen Reibelements hinweist.

Mit dem Verfahren soll daher erreicht werden, dass zu jedem Zeitpunkt einer Fahrt des Schienenfahrzeugs eine definierte Bremsart wie z.B. eine Notbremsung durchgeführt werden kann, ohne dass dadurch die prädiktive Reibelement-Temperatur $T_{pred}$ des wenigstens einen Reibelements die erlaubte Reibelement-Maximaltemperatur $T_{max}$ übersteigt. Der bei der fiktiven Bremsung durch die definierte Bremsart entstehende zusätzliche Temperaturhub in Form des zweiten Temperaturanteils dT wird daher bei der Überwachung und Beeinflussung des thermischen Zustands des Reibungsbremssystems berücksichtigt. Mit anderen Worten wird bereits bevor die definierte Bremsart tatsächlich ausgeführt wird, eine Schätzung oder Berechnung des zweiten Temperaturanteils dT vorzugsweise zu jedem Zeitpunkt und/oder kontinuierlich während der Fahrt durchgeführt, um die prädiktive Reibelement-Temperatur $T_{pred}$ unter der Voraussetzung vorherzusagen (prädiktiver Ansatz), dass die definierte Bremsart ausgeführt wird. Es ist dabei jedoch nicht zwingend notwendig, dass die definierte Bremsart dann auch tatsächlich parallel zur aktuellen Fahrbetriebssituation durchgeführt wird. Die Schätzung oder die Berechnung des zweiten Temperaturanteils dT wird nur aus Sicherheitsgründen durchgeführt, um eine Temperaturüberlastung des wenigstens einen Reibelements des Reibungsbremssystems zu jedem Zeitpunkt einer Fahrt zu vermeiden, ohne dass dabei zwingend notwendig ist, dass die definierte Bremsart tatsächlich ausgeführt wird. Die Ausgangssituation bildet daher die aktuelle Fahrbetriebssituation, in welcher das Schienenfahrzeug mit einer bestimmten Geschwindigkeit und Beladung und unter bestimmten Umgebungs- und Streckenbedingungen entlang einer Strecke fährt, welche beispielsweise eben ist oder ein bestimmtes Gefälle oder eine bestimmte Steigung aufweist. Beispielsweise die Geschwindigkeit, die Beladung, das Gefälle bzw. die Steigung werden dann als Parameter erfasst. Auch kann die aktuelle Fahrbetriebssituation umfassen, dass bereits eine beispielsweise von der definierten Bremsart abweichende Betriebsbremsung ausgelöst worden ist, wobei dann beispielsweise der aktuelle Bremsdruck und/oder die aktuelle Bremskraft und/oder das aktuelle Bremsmoment als Parameter erfasst wird (werden). Alternativ kann in der aktuellen Fahrbetriebssituation auch nicht gebremst werden, dann sind die Parameter den aktuellen Bremsdruck und/oder die aktuelle Bremskraft und/oder das aktuelle Bremsmoment betreffend gleich Null. Weiter alternativ kann in der aktuellen Fahrbetriebssituation auch bereits mit einer definierten Bremsart gebremst werden beziehungsweise gebremst worden sein.

Auf der Basis dieser aktuellen tatsächlichen Fahrbetriebssituation bzw. der dabei direkt oder indirekt erfassten Parameter wird dann der erste Temperaturanteil $T_{current}$ der prädiktiven Reibelement-Temperatur $T_{pred}$ mittels eines Modells auf der Basis der aktuellen Fahrbetriebssituation des Schienenfahrzeugs berechnet oder geschätzt oder alternativ oder zusätzlich durch wenigstens einen Temperatursensor erfasst. Dieser erste Temperaturanteil $T_{current}$ entspricht dann der Temperatur, welche sich aufgrund der aktuellen Fahrbetriebssituation an dem wenigstens einen Reibelement tatsächlich einstellt.

Zusätzlich wird der zweite Temperaturanteil dT der prädiktiven Reibelement-Temperatur $T_{pred}$ berücksichtigt, welcher mittels des Modells berechnet oder geschätzt wird und welcher sich zusätzlich zu dem ersten Temperaturanteil $T_{current}$ an dem wenigstens einen Reibelement des Reibungsbremssystems einstellen würde, wenn in der aktuellen Fahrbetriebssituation des Schienenfahrzeugs eine Bremsung mit einer definierten Bremsart fiktiv durchgeführt werden würde, welche in der aktuellen Fahrbetriebssituation nicht oder noch nicht angefordert worden ist oder wird, aber in der aktuellen Fahrbetriebssituation angefordert werden könnte. Der erste Temperaturanteil $T_{current}$ wird bevorzugt ständig berechnet, auch wenn momentan eine bestimmte Bremsart durchgeführt wird. dT ist als zweiter Temperaturanteil der zusätzliche Temperaturhub, der beispielsweise geschwindigkeits- und/oder verzögerungsabhängig ist. Wenn daher tatsächlich eine Notbremsung eingeleitet wird, erhöht sich der erste Temperaturanteil $T_{current}$, auf der anderen Seite verringert sich der zweite Temperaturanteil dT und damit die maximale Geschwindigkeit.

Dann wird die prädiktive Reibelement-Temperatur $T_{pred}$ des wenigstens einen Reibelements des Reibungsbremssystems als Summe aus dem ersten Temperaturanteil $T_{current}$ und dem zweiten Temperaturanteil dT bestimmt. Diese prädiktive Reibelement-Temperatur $T_{pred}$ würde sich daher theoretisch oder fiktiv an oder in dem wenigstens einen Reibelement geschätzt oder berechnet einstellen, wenn in der aktuellen Fahrbetriebssituation die definierte Bremsart ausgeführt wird.

Da ein Schienenfahrzeug gewöhnlich mehrere Reibungsbremsen - beispielsweise in Form von Scheibenbremsen und/oder Klotzbremsen - aufweist, kann beispielsweise die thermisch am höchsten belastete Reibungsbremse als (thermisch) schwächstes Glied den Maßstab für die Bestimmung der optimalen oder maximal zulässigen Geschwindigkeit des Schienenfahrzeugs bilden. Jedes der in einem Zug verbauten Reibelement-Paare wird vorzugsweise sein eigenes $T_{pred}$ lokal ermitteln. Man erhält daher n lokal ermittelte $T_{pred}$-Temperaturen. In diesem Fall sollte auf den höheren Zugebenen ein Algorithmus vorgegeben werden, der aus diesen n Werten im Sinne einer Konsolidierung die richtigen Schlüsse zieht und die richtigen Anweisungen an den Fahrer oder eine Fahrautomatik meldet.

So könnte beispielsweise der Mittelwert aus allen lokal ermittelten $T_{pred}$-Werten gebildet werden, und wenn der Mittelwert $<T_{max}$ ist, darf der Zug schneller fahren. Nach einem alternativen Algorithmus können im Sinne einer Maximalwertbetrachtung auch "Ausreißer" nach oben und unten im Rahmen der Konsolidierung aus der weiteren Berechnung entfernt werden.

In den Unteransprüchen sind vorteilhafte Weiterbildungen der in Anspruch 1 angegebenen Erfindung möglich.

Wie oben bereits angedeutet, umfasst die definierte Bremsart wenigstens eine der folgenden Bremsarten: Eine Notbremsung, eine Zwangsbremsung, eine Schnellbremsung, eine Gefahrbremsung.

Nach DIN EN 14478:2005-06 sind diese Bremsarten wie folgt definiert:

**Schnellbremsung**

Aufbringen einer vordefinierten Bremskraft unter Anwendung aller einsatzfähigen Bremsen, das das geforderte Bremsvermögen und das geforderte

Sicherheitsniveau gewährleistet. Das in fahrzeugspezifischen Europäischen Normen (EN) beschriebene Bremsvermögen und das Sicherheitsniveau der Schnellbremsung sind unter der Voraussetzung, dass der benötigte Kraftschluss und andere notwendige Voraussetzungen gegeben sind, üblicherweise gleich oder größer als die entsprechenden Werte einer maximalen Betriebsbremsung (Vollbremsung). Im Deutschen kann sich der Begriff abhängig vom jeweiligen Zugtyp oder Verkehrssystem und der Art der Aktivierung der Schnellbremsung, wie nachfolgend erläutert, ändern:

| | |
|---|---|
| **Schnellbremsung** | Schnellbremsung, die vom Triebfahrzeugführer ausgelöst wird; |
| **Gefahrbremsung** | Schnellbremsung bei Nahverkehrsbremssystemen; |
| **Zwangsbremsung** | Schnellbremsung, die durch Signal oder Schutzsysteme automatisch aktiviert wird (z. B. Zugbeeinflussungssysteme); |
| **Notbremsung** | Schnellbremsung, die von Passagieren oder dem Zugpersonal durch Betätigung eines Notbremszuggriffs ausgelöst wird. Der Notbremszuggriff ist die Betätigungsschnittstelle eines Fahrgastalarmsystems. |
| **Vollbremsung** | größtes erreichbares Niveau der Betriebsbremsung |
| **Sicherheitsbremsung** | spezifisch für Nahverkehrsbremssysteme, Bremsung mit einem höheren Sicherheitsniveau als bei Betriebs- und Gefahrbremsungen. Das Bremsvermögen kann geringer als bei maximaler Betriebsbremsung oder bei einer Gefahrbremsung sein. |
| **Betriebsbremsung** | Aufbringen einer einstellbaren Bremskraft zur Regulierung der Geschwindigkeit eines Zuges einschließlich der Reduzierung der Geschwindigkeit, des Anhaltens und des vorübergehenden Stillstands und es ist die am häufigsten benutzte Bremsart. |

Wie oben bereits ausgeführt, kann der Parameter bzw. die Parameter, welche die aktuelle Fahrbetriebssituation charakterisieren, wenigstens einer der folgenden Parameter sein: Die aktuelle Geschwindigkeit des Schienenfahrzeugs, die aktuelle Bremskraft, das aktuelle Bremsmoment, der aktuelle Bremsdruck, die Umgebungstemperatur des Schienenfahrzeugs, die aktuelle Last und/oder Beladung des Schienenfahrzeugs, eine Steigung oder ein Gefälle der durch das Schienenfahrzeug befahrenen Strecke, eine Service-Bremsung oder eine Betriebs-Bremsung, mit einer Bremswirkung, welche geringer ist als die Bremswirkung bei der definierten Bremsart. Diese Aufzählung ist nicht abschließend. Weiterhin sind weitere Parameter denkbar, welche eine aktuelle Fahrbetriebssituation eines Schienenfahrzeugs charakterisieren können wie beispielsweise auch ein Reibwert zwischen den Rädern und den Schienen.

Bevorzugt kann wenigstens eine Reibelement des Reibungsbremssystems eine Bremsscheibe und/oder einen Bremsbelag einer Scheibenbremse des Reibungsbremssystems beinhalten. Alternativ sind auch andere Reibungsbremsen möglich wie z.B. Klotzbremsen.

Besonders bevorzugt, falls sich herausgestellt hat, dass die prädiktive Reibelement-Temperatur $T_{pred}$ größer als die erlaubte Reibelement-Maximaltemperatur $T_{max}$ des wenigstens einen Reibelements ist, kann das erste Signal

a) ein Warnsignal darstellen, welches über eine Ausgabeeinheit optisch und/oder akustisch ausgegeben wird und welches einen Hinweis auf den potentiell thermisch kritischen Zustand des wenigstens einen Reibelements repräsentiert oder beinhaltet, und/oder

b) ein erstes Beeinflussungssignal darstellen, welches an wenigstens eine Steuerung des Schienenfahrzeugs ausgegeben wird, welche die Traktion und/oder die Bremse des Schienenfahrzeugs steuert oder regelt, und durch welches die Fahrgeschwindigkeit v des Schienenfahrzeugs und/oder die Verzögerung a des Schienenfahrzeugs solange reduziert wird, bis die prädiktive Reibelement-Temperatur $T_{pred}$ kleiner oder gleich in Bezug auf die erlaubte Reibelement-Maximaltemperatur $T_{max}$ des wenigstens einen Reibelements ist.

Das Warnsignal kann beispielsweise an einen Zugführer ausgegeben werden, damit dieser die Geschwindigkeit und/oder die Verzögerung reduziert. Alternativ oder zusätzlich kann die Geschwindigkeit und/oder die Verzögerung des Schienenfahrzeugs auf der Basis des ersten Beeinflussungssignals beispielsweise durch eine Regeleinheit automatisch reduziert werden.

In dem anderen Fall, falls sich herausgestellt hat, dass die prädiktive Reibelement-Temperatur $T_{pred}$ kleiner als die erlaubte Reibelement-Maximaltemperatur $T_{max}$ des wenigstens einen Reibelements ist, kann ein zweites Signal erzeugt werden, welches einen thermisch unkritischen Zustand des wenigstens einen Reibelements repräsentiert.

Das zweite Signal kann dann insbesondere

a) ein Hinweissignal darstellen, welches über eine Ausgabeeinheit optisch und/oder akustisch ausgegeben wird und welches einen Hinweis dahingehend beinhaltet, dass eine aktuelle Geschwindigkeit des Schienenfahrzeugs beibehalten oder erhöht werden kann, und/oder

b) ein zweites Beeinflussungssignal darstellen, welches an wenigstens eine Steuerung des Schienenfahrzeugs ausgegeben wird, welche die Traktion und/oder die Bremse des Schienenfahrzeugs steuert oder regelt, und durch welches die Fahrgeschwindigkeit v des Schienenfahrzeugs und/oder die Verzögerung a des Schienenfahrzeugs solange erhöht wird, bis die prädiktive Reibelement-Temperatur $T_{pred}$ gleich in Bezug auf die erlaubte Reibelement-Maximaltemperatur $T_{max}$ des wenigstens einen Reibelements ist. Um die aktuelle Geschwindigkeit automatisch zu erhöhen, sind gewöhnlich noch weitere Faktoren zu berücksichtigen. Beispielsweise könnten streckenbedingt Geschwindigkeitsbegrenzungen existieren oder der Zug fährt in den Bahnhof ein oder bei einer Bergabfahrt darf die Geschwindigkeit per se nicht erhöht werden.

Das Hinweissignal kann beispielsweise an einen Zugführer ausgegeben werden, damit dieser die Geschwindigkeit und/oder die Verzögerung beibehält oder vorzugsweise erhöht, sofern dies aufgrund der betrieblichen Randbedingungen, z.B. streckenbedingten Geschwindigkeitsbegrenzungen, möglich ist. Alternativ oder zusätzlich kann die Geschwindigkeit und/oder die Verzögerung des Schienenfahrzeugs auf der Basis des ersten Beeinflussungssignals auch automatisch beibehalten oder bevorzugt erhöht werden.

In diesem Fall ist daher das "thermische Belastungspotenzial" des wenigstens einen Reibelements des Reibungsbremssystems noch nicht voll ausgeschöpft, so dass die Geschwindigkeit und/oder die Verzögerung des Schienenfahrzeugs allein aus thermischen Gründen erhöht werden kann. Unter diesem Gesichtspunkt ist eine Geschwindigkeit und/oder eine Verzögerung ideal, bei welcher die prädiktive Reibelement-Temperatur $T_{pred}$ der erlaubte Reibelement-Maximaltemperatur $T_{max}$ des wenigstens einen Reibelements entspricht.

Ein weiterer thermisch kritischer Zustand des wenigstens einen Reibungselements liegt vor, falls bereits der erste Temperaturanteil $T_{current}$ der prädiktiven Reibelement-Temperatur $T_{pred}$ alleine, d.h. ohne, dass der zweite Temperaturanteil dT einbezogen wird, größer als die erlaubte Reibelement-Maximaltemperatur $T_{max}$ des wenigstens einen Reibelements ist. Dann wird bevorzugt ein drittes Signal erzeugt.

Das dritte Signal kann

a) ein Warnsignal darstellen, welches über eine Ausgabeeinheit optisch und/oder akustisch ausgegeben wird und welches einen Hinweis auf einen thermisch kritischen Zustand des wenigstens einen Reibelements repräsentiert oder beinhaltet, und/oder

b) ein drittes Beeinflussungssignal darstellen, welches an wenigstens eine Steuerung des Schienenfahrzeugs ausgegeben wird, welche die Traktion und/oder die Bremse des Schienenfahrzeugs steuert oder regelt, und durch welches die Fahrgeschwindigkeit v des Schienenfahrzeugs und/oder die Verzögerung a des Schienenfahrzeugs solange reduziert wird, bis der erste Temperaturanteil $T_{current}$ kleiner oder gleich in Bezug auf die erlaubte Reibelement-Maximaltemperatur $T_{max}$ des wenigstens einen Reibelements ist.

Dabei kann das Warnsignal wiederum beispielsweise an einen Zugführer ausgegeben werden, damit dieser die Geschwindigkeit und/oder die Verzögerung reduziert. Alternativ oder zusätzlich kann die Geschwindigkeit und/oder die Verzögerung des Schienenfahrzeugs auf der Basis des dritten Beeinflussungssignals beispielsweise durch eine Regeleinheit automatisch reduziert werden.

Gemäß einem zweiten Aspekt geht die Erfindung aus von einer Vorrichtung zur Überwachung und Beeinflussung des thermischen Zustands eines Reibungsbremssystems eines Schienenfahrzeugs abhängig von einer wenigstens teilweise mittels eines Modells berechneten oder geschätzten prädiktiven Reibelement-Temperatur $T_{pred}$ wenigstens eines Reibelements des Reibungsbremssystems, welche wenigstens Folgendes umfasst:

a) Erfassungsmittel, die ausgebildet sind zum Erfassen von wenigstens einem Parameter, welcher eine aktuelle Fahrbetriebssituation des Schienenfahrzeugs charakterisiert,

b) eine Recheneinheit, welche für die Überwachung und Beeinflussung des thermischen Zustands des Reibungsbremssystems ausgebildet und in welcher das Modell implementiert ist, wobei

c) die Erfassungsmittel den wenigstens einen Parameter in die Recheneinheit einsteuern, und wobei

d1) das Modell Berechnungen derart durchführt, dass es einen ersten Temperaturanteil $T_{current}$ der prädiktiven Reibelement-Temperatur $T_{pred}$ auf der Basis des wenigstens einen Parameters berechnet oder schätzt, und/oder wobei

d2) die Erfassungsmittel ausgebildet sind, dass sie den ersten Temperaturanteil $T_{current}$ der prädiktiven Reibelement-Temperatur ($T_{pred}$) erfassen und in das Modell einsteuern, und wobei

e) die Recheneinheit bzw. das Modell ausgebildet ist, dass sie (es) den ersten Temperaturanteil $T_{current}$ bei der Überwachung und Beeinflussung des thermischen Zustands des Reibungsbremssystems berücksichtigt.

Unter einem Modell soll jegliches physikalisch-mathematische Modell verstanden werden, welches durch ein speicherbares Programm in einer Recheneinheit implementierbar ist und mit dessen Hilfe basierend auf den Parametern die genannten Größen berechnet werden können.

Der zweite Aspekt ist erfindungsgemäß dadurch gekennzeichnet, dass

f) das Modell weiterhin Berechnungen derart durchführt, dass bei der Überwachung und Beeinflussung des thermischen Zustands des Reibungsbremssystems zusätzlich ein zweiter Temperaturanteil dT der prädiktiven Reibelement-Temperatur $T_{pred}$ berücksichtigt wird, welchen das Modell berechnet oder schätzt und welcher sich zusätzlich zu dem ersten Temperaturanteil $T_{current}$ an dem wenigstens einen Reibelement unter der Annahme einstellen würde, dass in der aktuellen Fahrbetriebssituation des Schienenfahrzeugs eine Bremsung mit einer definierten Bremsart fiktiv oder theoretisch durchgeführt wird, und wobei

g) das Modell weiterhin Berechnungen derart durchführt, dass die prädiktive Reibelement-Temperatur $T_{pred}$ des wenigstens einen Reibelements als Summe aus dem ersten Temperaturanteil $T_{current}$ und dem zweiten Temperaturanteil dT bestimmt wird, und dass

h) die Recheneinheit ausgebildet ist, dass sie auf der Basis der Berechnungen des Modells ein erstes Signal erzeugt, welches einen potenziell thermisch kritischen Zustand des wenigstens einen Reibelements repräsentiert, falls durch das Modell feststellt wird, dass die prädiktive Reibelement-Temperatur $T_{pred}$ größer als die erlaubte Reibelement-Maximaltemperatur $T_{max}$ des wenigstens einen Reibelements ist, und andernfalls kein erstes Signal erzeugt.

Die technischen Effekte der erfindungsgemäßen Vorrichtung stimmen mit den oben beschriebenen technischen Effekten des erfindungsgemäßen Verfahrens überein.

Die Erfindung betrifft auch ein Schienenfahrzeug mit einer oben beschriebenen Vorrichtung.

Zeichnung

Nachstehend sind Ausführungsbeispiele der Erfindung in der Zeichnung dargestellt und in der nachfolgenden Beschreibung näher erläutert. In der Zeichnung zeigt

Fig.1    eine schematische Darstellung einer beispielhaften Ausführung einer pneumatischen Reibungsbremseinrichtung mit einer Bremsscheibe und einer Bremszange mit Bremsbelägen;

Fig.2    ein Funktionsschaubild einer beispielhaften Ausführung einer erfindungsgemäßen Vorrichtung für eine Ausführung des erfindungsgemäßen Verfahrens;

Fig.3A/B    einen Ablaufplan des erfindungsgemäßen Verfahrens gemäß einer bevorzugten Ausführungsform;

Fig. 4    ein Diagramm, in welchem die Abhängigkeit eines zweiten Temperaturanteils dT von der Fahrgeschwindigkeit v und Beladungszustand dargestellt ist.

Beschreibung der Ausführungsbeispiele

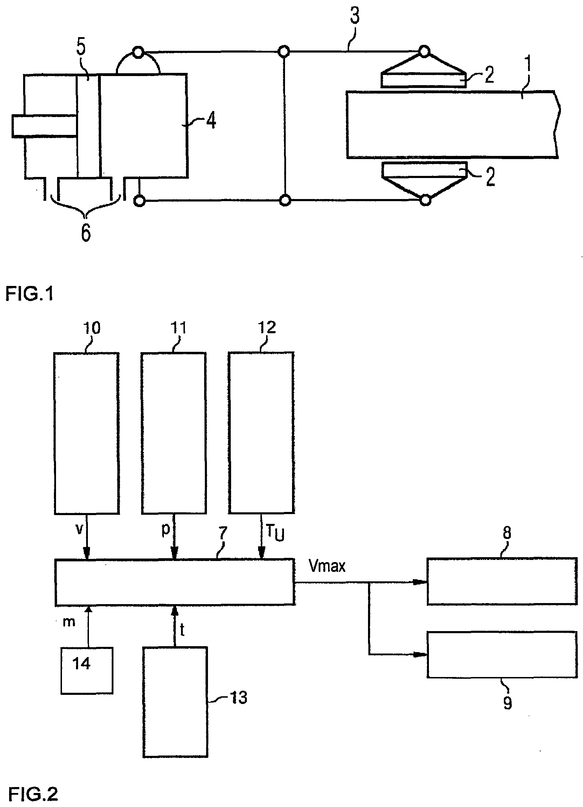

Ein in **Fig. 1** schematisch dargestellter Ausschnitt aus einer Reibungsbremseinrichtung eines Schienenfahrzeugs zeigt eine pneumatische Scheibenbremse. Diese umfasst ein erstes Reibelement 1, das beispielsweise als Bremsscheibe ausgeführt ist, die auf einer nicht dargestellten Radsatzwelle des Schienenfahrzeugs gelagert ist sowie eine Bremszange. Die Bremszange weist ein zweites Reibelement 2 auf, welches zwei Bremsbeläge umfasst. Weiterhin weist die Bremszange einen Bremszylinder 4 mit Druckluftanschlüssen 6 und einen Kolben 5 sowie ein Gestänge 3 auf. Der Kolben 5 betätigt das Gestänge 3, wodurch die auf dem Gestänge 3 angeordneten Bremsbeläge, d.h. das zweite Reibelement 2 an die Bremsscheibe, d.h. das erste Reibelement 1 gepresst werden. Über die Druckluftanschlüsse 6 wird der Kolben 5 zur Betätigung des Gestänges 3 mit Druckluft aus einem nicht dargestellten Druckluftsystem des Schienenfahrzeugs beaufschlagt. Das Druckluftsystem weist Komponenten zur Steuerung und Regelung der Reibungsbremseinrichtung, wie z.B. Kompressoren, Bremssteuergeräte etc. auf.

Eine bevorzugte Ausführungsform einer Vorrichtung zur Beeinflussung des kinematischen Verhaltens des Schienenfahrzeugs weist eine in **Fig. 2** dargestellte Recheneinheit 7 auf, in welcher ein Modell implementiert ist, das thermische Berechnungen entsprechend dem erfindungsgemäßen Verfahren durchführt.

Die Vorrichtung umfasst eine in **Fig. 2** dargestellte Regeleinheit 8, mit welcher das kinematische Verhalten des Schienenfahrzeugs aufgrund von Ergebnissen der thermischen Berechnungen beeinflusst wird.

Ein Gegeneinanderdrücken des ersten Reibelements 1 und des zweiten Reibelements 2 verursacht eine Bremswirkung auf das Schienenfahrzeug. Dabei erfolgt eine Umwandlung von kinetischer Energie des Schienenfahrzeugs in Wärme, wodurch eine Temperaturerhöhung des ersten Reibelements 1 und des zweiten Reibelements 2 verursacht wird. Ein Lösen des ersten Reibelements 1 und des zweiten Reibelements 2 voneinander bewirkt eine Reduktion bzw. eine Aufhebung der Bremswirkung auf das Schienenfahrzeug. Dadurch sowie durch eine Wirkung bekannter Wärmeübergangsprinzipien werden die Temperaturen in dem ersten Reibelement 1 sowie in dem zweiten Reibelement 2 reduziert, d.h. das erste Reibelement 1 und das zweite Reibelement 2 kühlen ab. Das beschriebene Temperaturverhalten wird mittels des erfindungsgemäßen Verfahrens berechnet oder geschätzt.

Die Vorrichtung umfasst einen Fahrgeschwindigkeitssensor 10 zur Erfassung einer Fahrgeschwindigkeit v, einen Bremsdrucksensor 11 zur Erfassung eines Bremsdrucks p und damit einer Bremskraft $F_B$, einen Umgebungstemperatursensor 12 zur Erfassung einer Umgebungstemperatur Tu, ein Zeitmessgerät 13 zur Erfassung einer Absolut-Zeit t sowie eine Lastbremsvorrichtung 14, die über entsprechende Datenleitungen mit einer Recheneinheit 7 verbunden sind, um die Sensorsignale dem Modell zur Verfügung zu stellen. Der Fahrgeschwindigkeitssensor 10, der Bremsdrucksensor 11 und der Umgebungstemperatursensor 12 sind in einem nicht dargestellten Fahrwerk des Schienenfahrzeugs angeordnet. Es ist jedoch auch denkbar, dass die Fahrgeschwindigkeit v sowie der Bremsdruck p aus einem Datenbussystem des Schienenfahrzeugs in die Recheneinheit 7 eingelesen werden. Weiterhin ist es auch vorstellbar, dass der Bremsdruck p aus einer Verzögerung und einer abzubremsenden Masse näherungsweise bestimmt wird. Die Verzögerung wird dabei beispielsweise durch Differentiation der Fahrgeschwindigkeit v berechnet oder über Beschleunigungssensoren ermittelt und die abzubremsende Masse m über eine Lastbremsvorrichtung 14 bestimmt. Darüber hinaus ist es auch denkbar, dass statt einer Fahrgeschwindigkeit v eine Winkelgeschwindigkeit eines Rads bzw. eine Raddrehzahl erfasst und die thermischen Berechnungen mit dieser Winkelgeschwindigkeit bzw. dieser Raddrehzahl durchgeführt werden. Weiterhin sind in einem hier nicht dargestellten Speicher der Recheneinheit 7 Konfigurationsdaten des Schienenfahrzeugs abgespeichert und stehen dem Modell ebenfalls zur Verfügung. In dem Speicher ist auch eine erlaubte Reibelement-Maximaltemperatur $T_{max}$ beispielsweise des ersten Reibelements 1 abgespeichert.

Das Zeitmessgerät 13 sowie die Recheneinheit 7 sind, implementiert in ein nicht dargestelltes Steuergerät, in einem nicht dargestellten Wagenkasten angeordnet. Die Recheneinheit 7 empfängt über entsprechende Datenleitungen von dem Fahrgeschwindigkeitssensor 10 Daten bezüglich der Fahrgeschwindigkeit v, von dem Bremsdrucksensor 11 Daten bezüglich des Bremsdrucks p bzw. der Bremskraft $F_B$, von dem Umgebungstemperatursensor 12 Daten bezüglich der Umgebungstemperatur Tu, von der Lastbremsvorrichtung 14 Daten bezüglich der Fahrzeugmasse m sowie von dem Zeitmessgerät 13 Daten bezüglich der Absolut-Zeit t (Zeitstempel) und führt Rechenoperationen entsprechend dem erfindungsgemäßen Verfahren aus. Weiterhin können auch in dem Speicher der Recheneinheit 7 gespeicherten Konfigurationsdaten des Schienenfahrzeugs in die Rechenoperationen des Modells einfließen.

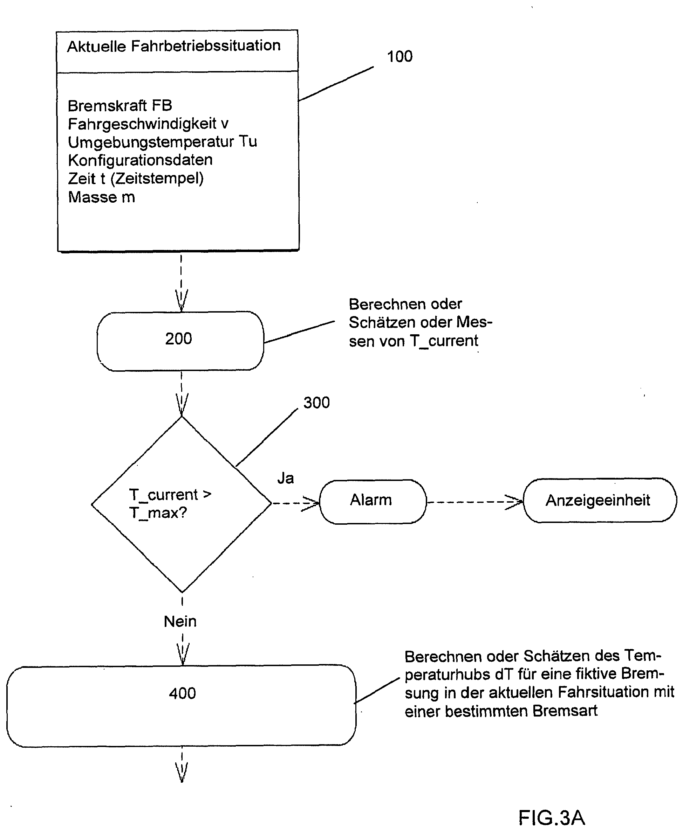

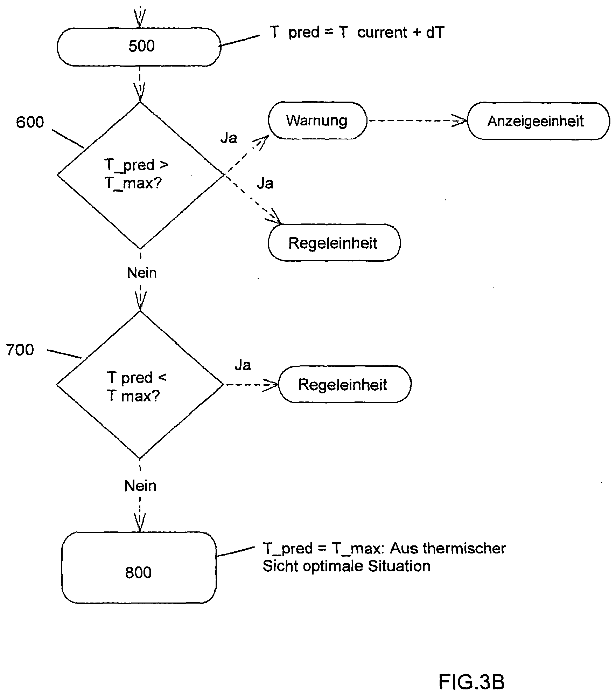

Hier beispielsweise unter Heranziehen der Fahrgeschwindigkeit v, der Bremskraft $F_B$, der Umgebungstemperatur Tu, der Absolut-Zeit t, der Masse m und der Konfigurationsdaten des Schienenfahrzeugs werden gemäß der Beschreibung zu **Fig. 3A** und **3B** thermische Zustände der in **Fig. 1** dargestellten Reibungsbremseinrichtung ermittelt, insbesondere von deren erstem Reibelement 1.

Die Recheneinheit 7 ist über entsprechende Datenleitungen mit einer in einer nicht dargestellten Fahrzeugsteuerung implementierten, in dem Wagenkasten angeordneten Regeleinheit 8 verbunden. Die Regeleinheit 8 beeinflusst das kinematische Verhalten des Schienenfahrzeugs in einer Weise, dass z.B. das Schienenfahrzeug durch aufgrund einer thermischen Berechnung in dem in der Recheneinheit 7 implementierten Modell erzeugte und an die Regeleinheit 8 übertragene Signale seine aktuelle Fahrgeschwindigkeit v beibehält, automatisch abgebremst oder beschleunigt wird. Das Abbremsen kann vorzugsweise durch eine Kontrolle der Traktion erfolgen, um nicht durch einen Eingriff der Reibungsbremse die Bremsscheibentemperatur und den Verschleiß zu erhöhen. Hierdurch kann eine Beeinflussung des thermischen Zustands der Reibungsbremseinrichtung realisiert werden.

Weiterhin ist eine über eine Signalleitung mit der Recheneinheit 7 verbundene Anzeigeeinheit 9 in einem nicht gezeigten Führerstand des Schienenfahrzeugs angeordnet. Auf ihr werden einem Triebfahrzeugführer aufgrund thermischer Berechnungen entsprechend dem weiter unten beschriebenen erfindungsgemäßen Verfahren ermittelte Hinweise oder Warnungen angezeigt. Hierdurch kann eine Überwachung des thermischen Zustands der Reibungsbremseinrichtung realisiert werden.

Auch ist es möglich, dass mit der Anzeigeeinheit 9 zusätzlich Geschwindigkeitsbeschränkungen, zulässige Verzögerungen oder zulässige Fahrprofile (zeitliche Abfolgen von Beschleunigungs- und Verzögerungsabschnitten sowie Phasen mit konstanter Fahrgeschwindigkeit v oder Phasen des Stillstands) angezeigt werden.

Zur Warnung vor einem ungünstigen kinematischen Verhalten des Schienenfahrzeugs im Hinblick auf thermische Zustände des Reibungsbremssystems können über eine Audio-Ausgabeeinrichtung der Anzeigeeinheit 9 zusätzlich akustische Signale an den Triebfahrzeugführer ausgegeben werden.

Dabei sind verschiedene Ausführungen und Anordnungen des Fahrgeschwindigkeitssensors 10, des Bremskraftsensors 11, des Umgebungstemperatursensors 12, des Zeitmessgeräts 13, der Anzeigeeinheit 9, der Recheneinheit

8

7, der Lastbremsvorrichtung 14 und der Regeleinheit 8 vorstellbar. Es ist beispielsweise denkbar, wie in **Fig. 2** gezeigt, die Recheneinheit 7 und die Regeleinheit 8 getrennt anzuordnen, oder aber die Recheneinheit 7 und die Regeleinheit 8 in einer Baueinheit zu integrieren.

Weiterhin ist es auch vorstellbar, dass beispielsweise die Recheneinheit 7 in einem Leitstand angeordnet ist und über Funksignale mit dem Schienenfahrzeug kommuniziert, d.h. beispielsweise Informationen über dessen Fahrgeschwindigkeit v empfängt und auf Grundlage einer durchgeführten, erfindungsgemäßen thermischen Berechnung Instruktionen zur Beschränkung der Fahrgeschwindigkeit v sendet.

**Fig. 3A** und **3B** zeigen einen Ablaufplan einer bevorzugten Ausführungsform des erfindungsgemäßen Verfahrens zur Überwachung und Beeinflussung des thermischen Zustands abhängig von einer berechneten oder geschätzten prädiktiven Reibelement-Temperatur $T_{pred}$ beispielsweise des ersten Reibelements 1 in Form der Bremsscheibe der Scheibenbremse.

Wie oben bereits beschrieben, werden in einem Schritt 100 Parameter erfasst, welche eine aktuelle Fahrbetriebssituation des Schienenfahrzeugs charakterisieren. Hierzu zählen hier beispielsweise die aktuelle Fahrgeschwindigkeit v, die aktuelle Bremskraft $F_B$, die aktuelle Umgebungstemperatur $T_u$, Daten bezüglich der Absolut-Zeit t (Zeitstempel), die aktuelle Masse m des Schienenfahrzeugs sowie die Konfigurationsdaten des Schienenfahrzeugs.

In dem Modell der Recheneinheit 7 wird dann in einem Schritt 200 ein erster Temperaturanteil $T_{current}$ der prädiktiven Reibelement-Temperatur $T_{pred}$ beispielsweise des ersten Reibelements 1 beispielsweise auf der Basis der oben genannten aktuellen Fahrbetriebssituation des Schienenfahrzeugs berechnet oder geschätzt. Alternativ oder auch zusätzlich kann der erste Temperaturanteil $T_{current}$ auch direkt durch einen Temperatursensor gemessen werden. Der erste Temperaturanteil $T_{current}$ entspricht dann beispielsweise der durch das Modell berechneten oder geschätzten Oberflächentemperatur, welche sich aufgrund der tatsächlichen aktuellen Fahrbetriebssituation an der Oberfläche des ersten Reibelements 1 einstellt.

In einem nachfolgenden Schritt 300 wird dann in dem Modell überprüft, ob der erste Temperaturanteil $T_{current}$ größer als die erlaubte Reibelement-Maximaltemperatur $T_{max}$ des ersten Reibelements 1 ist. Ist dies der Fall ("ja"), so erzeugt die Recheneinheit 7 beispielsweise ein Alarm- oder Warnsignal, welches dann an der Anzeigeeinheit 9 beispielsweise optisch ausgegeben wird und welches beispielsweise einen Hinweis auf einen kritischen thermischen Zustand des ersten Reibelements 1 repräsentiert oder beinhaltet. Alternativ oder zusätzlich könnte auch ein Beeinflussungssignal erzeugt werden, welches an die Regeleinheit 8 ausgegeben wird, welche die Traktion und/oder die Bremse des Schienenfahrzeugs steuert oder regelt. Mittels des Beeinflussungssignals wird dann beispielsweise die Fahrgeschwindigkeit v und/oder die Verzögerung a des Schienenfahrzeugs solange reduziert, bis der erste Temperaturanteil $T_{current}$ kleiner oder gleich in Bezug auf die erlaubte Reibelement-Maximaltemperatur $T_{max}$ des ersten Reibelements 1 ist.

Ist dies jedoch nicht der Fall ("nein"), so wird in einem Schritt 400 ein zweiter Temperaturanteil dT der prädiktiven Reibelement-Temperatur $T_{pred}$ mittels des in der Recheneinheit 7 implementierten Modells berechnet oder geschätzt wird. Dieser zweite Temperaturanteil dT wird **Fig. 3A** als Temperaturhub dT bezeichnet und würde sich zusätzlich zu dem ersten Temperaturanteil $T_{current}$ an der Oberfläche des ersten Reibelements 1 einstellen, wenn in der aktuellen Fahrbetriebssituation des Schienenfahrzeugs eine Bremsung mit einer definierten Bremsart fiktiv oder theoretisch durchgeführt werden würde. Diese definierte Bremsart ist beispielsweise in der aktuellen Fahrbetriebssituation nicht oder noch nicht angefordert worden, könnte aber in der aktuellen Fahrbetriebssituation angefordert werden.

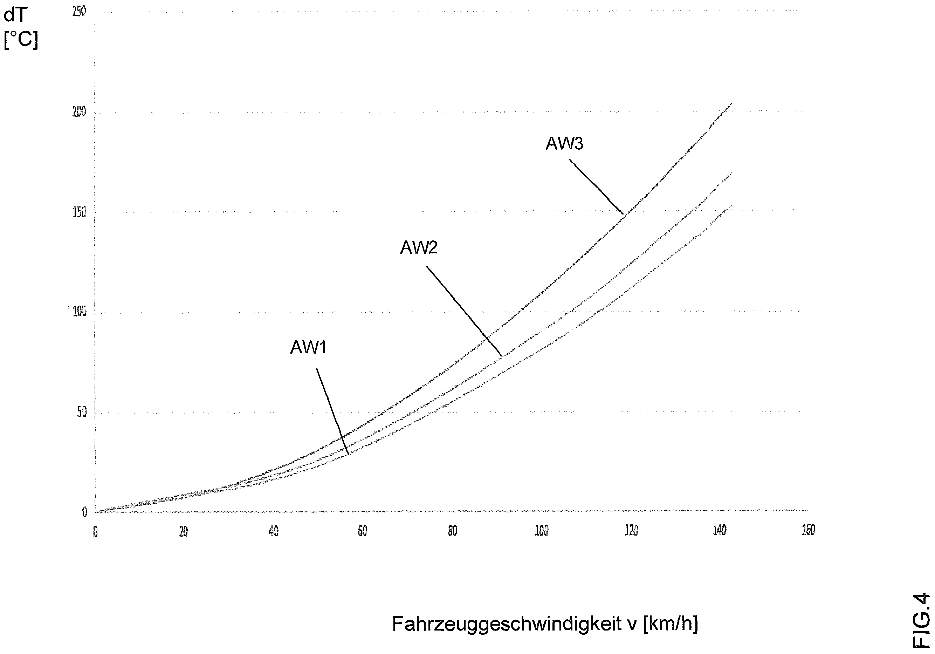

Der zweite Temperaturanteil dT der prädiktiven Reibelement-Temperatur $T_{pred}$ ist insbesondere abhängig von der Fahrgeschwindigkeit v, welche in der aktuellen Fahrbetriebssituation zum Zeitpunkt t (Zeitstempel) vorliegt. **Fig. 4** zeigt ein Diagramm, welches beispielsweise in einem Kennfeld in der Recheneinheit 7 abgelegt ist und in welchem die Abhängigkeit des zweiten Temperaturanteils dT von der Fahrgeschwindigkeit v für verschiedene Lastfälle, beispielsweise AW1: geringe Beladung, AW2: mittlere Beladung und AW3 hohe Beladung dargestellt ist. Selbstverständlich können in dem Kennfeld auch andere Lastfälle berücksichtigt sein. Wie zu sehen, steigt mit steigender Fahrgeschwindigkeit v, welche (auch) die aktuelle Fahrbetriebssituation charakterisiert, auch der zweite Temperaturanteil dT an. Folglich wird durch das Diagramm von **Fig. 4** der in der aktuellen Fahrbetriebssituation vorliegenden Fahrgeschwindigkeit v und Beladung des Schienenfahrzeugs ein bestimmter zweiter Temperaturanteil dT der prädiktiven Reibelement-Temperatur $T_{pred}$ kennfeldartig zugeordnet.

Dann wird in einem Schritt 500 die prädiktive Reibelement-Temperatur $T_{pred}$ beispielsweise als Oberflächentemperatur des ersten Reibelements 1 als Summe aus dem ersten Temperaturanteil $T_{current}$ und dem zweiten Temperaturanteil dT bestimmt:

$$T_{pred} = T_{current} + dT \quad (1)$$

Anschließend wird in einem Schritt 600 überprüft, ob die prädiktive Reibelement-Temperatur $T_{pred}$ größer als die erlaubte Reibelement-Maximaltemperatur $T_{max}$ des ersten Reibelements 1 ist. Ist dies der Fall ("ja"), so erzeugt die Recheneinheit 7 hier beispielsweise ein Warnsignal, welches dann an der Anzeigeeinheit 9 optisch ausgegeben wird und welches beispielsweise einen Hinweis auf einen kritischen thermischen Zustand des ersten Reibelements 1 repräsentiert oder beinhaltet. Alternativ oder zusätzlich könnte auch ein Beeinflussungssignal erzeugt werden, welches dann an die Regeleinheit 8 ausgegeben wird, welche die Traktion und/oder die Bremse des Schienenfahrzeugs steuert oder regelt. Mittels des Beeinflussungssignals wird dann beispielsweise die Fahrgeschwindigkeit v und/oder die Verzögerung a des Schienenfahrzeugs solange reduziert, bis die prädiktive Reibelement-Temperatur $T_{pred}$ beispielsweise gleich der erlaubten Reibelement-Maximaltemperatur $T_{max}$ des ersten Reibelements 1 ist. Dies stellt einen anzustrebenden Ideal-Zustand dar, weil dann das "thermische Belastungspotenzial" des ersten Reibelements 1 voll ausgeschöpft wird.

Ist dies jedoch nicht der Fall ("nein"), so wird in einem Schritt 700 überprüft, ob die prädiktive Reibelement-Temperatur $T_{pred}$ (bereits) kleiner als die erlaubte Reibelement-Maximaltemperatur $T_{max}$ des ersten Reibelements 1 ist. Ist dies der Fall ("ja"), wird ein eventuell zuvor erzeugtes Warnsignal zurückgesetzt bzw. kein Warnsignal erzeugt. Lediglich im Hinblick auf den thermischen Zustand des ersten Reibelements 1 könnte jedoch die Geschwindigkeit v des Schienenfahrzeugs erhöht werden. Sofern es daher weitere Bedingungen wie beispielsweise der Fahrplan oder die Verkehrssituation zulassen, könnte die Geschwindigkeit v solange erhöht werden, bis die prädiktive Reibelement-Temperatur $T_{pred}$ der erlaubten Reibelement-Maximaltemperatur $T_{max}$ des ersten Reibelements 1 entspricht. Aus diesem Grund erzeugt die Recheneinheit 7 im Fall "ja" beispielsweise ein Beeinflussungssignal und steuert es in die Regeleinheit 8 ein, damit diese die Traktion bzw. den Antrieb des Schienenfahrzeugs steuert oder regelt, um die Geschwindigkeit v entsprechend zu erhöhen.

Ergibt die Abfrage in Schritt 700 jedoch, dass dies nicht der Fall ist ("nein"), so liegt in Schritt 800 lediglich in thermischer Hinsicht der oben beschriebene Ideal-Zustand vor, in welchem die prädiktive Reibelement-Temperatur $T_{pred}$ der erlaubten Reibelement-Maximaltemperatur $T_{max}$ des ersten Reibelements 1 entspricht. In diesem Fall ist daher keine Anpassung der Geschwindigkeit v notwendig.

Es ist klar, dass das oben beschriebene Verfahren auch für das zweite Reibelement 2 der Scheibenbremse oder zusätzlich angewendet werden kann.

Bezugszeichenliste

| | |
|---|---|
| 1 | erstes Reibelement |
| 2 | zweites Reibelement |
| 3 | Gestänge |
| 4 | Bremszylinder |
| 5 | Kolben |
| 6 | Druckluftanschlüsse |
| 7 | Recheneinheit |
| 8 | Regeleinheit |
| 9 | Anzeigeeinheit |
| 10 | Fahrgeschwindigkeitssensor |
| 11 | Bremsdrucksensor |
| 12 | Umgebungstemperatursensor |
| 13 | Zeitmessgerät |
| 14 | Lastbremsvorrichtung |
| $T_{current}$ | erster Temperaturanteil |
| dT | zweiter Temperaturanteil |
| $T_{pred}$ | prädiktive Reibelement-Temperatur |
| $T_{max}$ | erlaubte Reibelement-Maximaltemperatur |
| v | Fahrzeuggeschwindigkeit |
| m | Fahrzeugmasse |
| FB | Bremskraft |
| Tu | Umgebungstemperatur |
| t | Zeit |

**Patentansprüche**

1. Verfahren zur Überwachung und Beeinflussung des thermischen Zustands eines Reibungsbremssystems eines Schienenfahrzeugs abhängig von einer berechneten oder geschätzten prädiktiven Reibelement-Temperatur ($T_{pred}$) wenigstens eines Reibelements (1, 2) des Reibungsbremssystems, beinhaltend wenigstens die folgenden Schritte:

a) Erfassen von wenigstens einem Parameter, welche eine aktuelle Fahrbetriebssituation des Schienenfahrzeugs charakterisiert,

b) Berechnen, Schätzen oder Bestimmen eines ersten Temperaturanteils ($T_{current}$) der prädiktiven Reibelement-Temperatur ($T_{pred}$) auf der Basis der aktuellen Fahrbetriebssituation des Schienenfahrzeugs und Berücksichtigung des ersten Temperaturanteils ($T_{current}$) bei der Überwachung und Beeinflussung des thermischen Zustands des Reibungsbremssystems, **dadurch gekennzeichnet, dass**

c) bei der Überwachung und Beeinflussung des thermischen Zustands des Reibungsbremssystems zusätzlich ein zweiter Temperaturanteil (dT) der prädiktiven Reibelement-Temperatur ($T_{pred}$) berücksichtigt wird, welcher sich zusätzlich zu dem ersten Temperaturanteil ($T_{current}$) an dem wenigstens einen Reibelement (1, 2) unter der Annahme einstellen würde, dass in der aktuellen Fahrbetriebssituation des Schienenfahrzeugs eine Bremsung mit einer definierten Bremsart fiktiv oder theoretisch durchgeführt wird, und dass

d) die prädiktive Reibelement-Temperatur ($T_{pred}$) des wenigstens einen Reibelements (1, 2) als Summe aus dem ersten Temperaturanteil ($T_{current}$) und dem zweiten Temperaturanteils (dT) bestimmt wird, und dass

e) falls die prädiktive Reibelement-Temperatur ($T_{pred}$) größer als die erlaubte Reibelement-Maximaltemperatur ($T_{max}$) des wenigstens einen Reibelements (1, 2) ist, ein erstes Signal erzeugt wird, welches einen potentiell thermisch kritischen Zustand des wenigstens einen Reibelements (1, 2) repräsentiert, und andernfalls kein erstes Signal erzeugt wird.

2. Verfahren nach Anspruch 1, **dadurch gekennzeichnet, dass** die definierte Bremsart wenigstens eine der folgenden Bremsarten umfasst: Eine Notbremsung, eine Zwangsbremsung, eine Schnellbremsung, eine Gefahrbremsung.

3. Verfahren nach einem der vorhergehenden Ansprüche, **dadurch gekennzeichnet, dass** das erste Signal

c) ein Warnsignal darstellt, welches über eine Ausgabeeinheit optisch und/oder akustisch ausgegeben wird und welches einen Hinweis auf den potentiell thermisch kritischen Zustand des wenigstens einen Reibelements (1, 2) repräsentiert oder beinhaltet, und/oder

d) ein erstes Beeinflussungssignal darstellt, welches an wenigstens eine Steuerung des Schienenfahrzeugs ausgegeben wird, welche die Traktion und/oder die Bremse des Schienenfahrzeugs steuert oder regelt, und durch welches die Fahrgeschwindigkeit (v) des Schienenfahrzeugs und/oder die Verzögerung (a) des Schienenfahrzeugs solange reduziert wird, bis die prädiktive Reibelement-Temperatur ($T_{pred}$) kleiner oder gleich in Bezug auf die erlaubte Reibelement-Maximaltemperatur ($T_{max}$) des wenigstens einen Reibelements (1, 2) ist.

4. Verfahren nach einem der vorhergehenden Ansprüche, **dadurch gekennzeichnet, dass** falls die prädiktive Reibelement-Temperatur ($T_{pred}$) kleiner als die erlaubte Reibelement-Maximaltemperatur ($T_{max}$) des wenigstens einen Reibelements (1, 2) ist, ein zweites Signal erzeugt wird, welches einen thermisch unkritischen Zustand des wenigstens einen Reibelements (1, 2) repräsentiert.

5. Verfahren nach einem der vorhergehenden Ansprüche, **dadurch gekennzeichnet, dass** das zweite Signal

c) ein Hinweissignal darstellt, welches über eine Ausgabeeinheit optisch und/oder akustisch ausgegeben wird und welches einen Hinweis dahingehend beinhaltet, dass eine aktuelle Geschwindigkeit des Schienenfahrzeugs aus thermischer Sicht beibehalten oder erhöht werden kann, und/oder

d) ein zweites Beeinflussungssignal darstellt, welches an wenigstens eine Steuerung des Schienenfahrzeugs ausgegeben wird, welche die Traktion und/oder die Bremse des Schienenfahrzeugs steuert oder regelt, und durch welches die Fahrgeschwindigkeit (v) des Schienenfahrzeugs und/oder die Verzögerung (a) des Schienenfahrzeugs solange erhöht wird, bis die prädiktive Reibelement-Temperatur ($T_{pred}$) gleich in Bezug auf die erlaubte Reibelement-Maximaltemperatur ($T_{max}$) des wenigstens einen Reibelements (1, 2) ist.

6. Verfahren nach einem der vorhergehenden Ansprüche, **dadurch gekennzeichnet, dass** falls bereits der erste Temperaturanteil ($T_{current}$) der prädiktiven Reibelement-Temperatur ($T_{pred}$) alleine größer als die erlaubte Reibelement-Maximaltemperatur ($T_{max}$) des wenigstens einen Reibelements (1, 2) ist, ein drittes Signal erzeugt wird, welches einen thermisch kritischen Zustand des wenigstens einen Reibelements (1, 2) repräsentiert.

7. Verfahren nach Anspruch 6, **dadurch gekennzeichnet, dass** das dritte Signal

a) ein Warnsignal darstellt, welches über eine Ausgabeeinheit optisch und/oder akustisch ausgegeben wird und welches einen Hinweis auf den thermisch kritischen Zustand des wenigstens einen Reibelements (1, 2) repräsentiert oder beinhaltet, und/oder

b) ein drittes Beeinflussungssignal darstellt, welches an wenigstens eine Steuerung des Schienenfahrzeugs ausgegeben wird, welche die Traktion und/oder die Bremse des Schienenfahrzeugs steuert oder regelt, und durch welches die Fahrgeschwindigkeit (v) des Schienenfahrzeugs und/oder die Verzögerung (a) des Schienenfahrzeugs solange reduziert wird, bis der erste Temperaturanteil ($T_{current}$) kleiner oder gleich in Bezug auf die erlaubte Reibelement-Maximaltemperatur ($T_{max}$) des wenigstens einen Reibelements (1, 2) ist.

8. Verfahren nach einem der vorhergehenden Ansprüche, **dadurch gekennzeichnet, dass** der Parameter, welcher die aktuelle Fahrbetriebssituation charakterisiert, wenigstens einer der folgenden Parameter ist: Die aktuelle Geschwindigkeit des Schienenfahrzeugs, die aktuelle Bremskraft, das aktuelle Bremsmoment, der aktuelle Bremsdruck, die Umgebungstemperatur des Schienenfahrzeugs, die aktuelle Last und/oder Beladung des Schienenfahrzeugs, eine Steigung oder ein Gefälle der durch das Schienenfahrzeug befahrenen Strecke, eine Service-Bremsung oder eine Betriebs-Bremsung.

9. Verfahren nach einem der vorhergehenden Ansprüche, **dadurch gekennzeichnet, dass** das Reibelement (1, 2) eine Bremsscheibe und/oder einen Bremsbelag einer Scheibenbremse des Reibungsbremssystems, oder eine Radlauffläche und/oder einen Bremsklotz einer Klotzbremseinheit des Reibungsbremssystems beinhaltet.

10. Vorrichtung zur Überwachung und Beeinflussung des thermischen Zustands eines Reibungsbremssystems eines Schienenfahrzeugs abhängig von einer wenigstens teilweise mittels eines Modells berechneten oder geschätzten prädiktiven Reibelement-Temperatur ($T_{pred}$) wenigstens eines Reibelements (1, 2) des Reibungsbremssystems, welche wenigstens Folgendes umfasst:

a) Erfassungsmittel (10, 11, 12, 13), die ausgebildet sind zum Erfassen von wenigstens einem Parameter, welcher eine aktuelle Fahrbetriebssituation des Schienenfahrzeugs charakterisiert,
b) eine Recheneinheit (7), welche für die Überwachung und Beeinflussung des thermischen Zustands des Reibungsbremssystems ausgebildet und in welcher das Modell implementiert ist, und, wobei
c) die Erfassungsmittel (10, 11, 12, 13) den wenigstens einen Parameter in die Recheneinheit (7) einsteuern, und wobei

d1) das Modell Berechnungen derart durchführt, dass es einen ersten Temperaturanteil ($T_{current}$) der prädiktiven Reibelement-Temperatur ($T_{pred}$) auf der Basis des wenigstens einen Parameters berechnet oder schätzt, oder wobei
d2) die Erfassungsmittel (10, 11, 12, 13) ausgebildet sind, dass sie den ersten Temperaturanteil ($T_{current}$) der prädiktiven Reibelement-Temperatur ($T_{pred}$) erfassen und in das Modell einsteuern, und wobei

e) die Recheneinheit (7) ausgebildet ist, dass sie den ersten Temperaturanteil $T_{current}$ bei der Überwachung und Beeinflussung des thermischen Zustands des Reibungsbremssystems berücksichtigt, **dadurch gekennzeichnet, dass**
f) das Modell weiterhin Berechnungen derart durchführt, dass bei der Überwachung und Beeinflussung des thermischen Zustands des Reibungsbremssystems zusätzlich ein zweiter Temperaturanteil (dT) der prädiktiven Reibelement-Temperatur ($T_{pred}$) berücksichtigt wird, welchen das Modell berechnet oder schätzt und welcher sich zusätzlich zu dem ersten Temperaturanteil ($T_{current}$) an dem wenigstens einen Reibelement (1, 2) unter der Annahme einstellen würde, dass in der aktuellen Fahrbetriebssituation des Schienenfahrzeugs eine Bremsung mit einer definierten Bremsart fiktiv oder theoretisch durchgeführt wird, und wobei
g) das Modell weiterhin Berechnungen derart durchführt, dass die prädiktive Reibelement-Temperatur ($T_{pred}$) des wenigstens einen Reibelements (1, 2) als Summe aus dem ersten Temperaturanteil ($T_{current}$) und dem zweiten Temperaturanteil (dT) bestimmt wird, und dass
h) die Recheneinheit (7) ausgebildet ist, dass sie auf der Basis der Berechnungen des Modells ein erstes Signal erzeugt, welches einen potentiell thermisch kritischen Zustand des wenigstens einen Reibelements (1, 2) repräsentiert, falls durch das Modell feststellt wird, dass die prädiktive Reibelement-Temperatur ($T_{pred}$) größer als die erlaubte Reibelement-Maximaltemperatur ($T_{max}$) des wenigstens einen Reibelements (1, 2) ist, und andernfalls kein erstes Signal erzeugt.

11. Vorrichtung nach Anspruch 10, **dadurch gekennzeichnet, dass** die definierte Bremsart wenigstens eine der folgenden Bremsarten umfasst: Eine Notbremsung, eine Zwangsbremsung, eine Schnellbremsung, eine Gefahrbremsung.

12. Vorrichtung nach einem der Ansprüche 10 oder 11, **dadurch gekennzeichnet, dass** das erste Signal

a) ein Warnsignal darstellt, welches über eine Ausgabeeinheit optisch und/oder akustisch ausgegeben wird und welches einen Hinweis auf den potentiell thermisch kritischen Zustand des wenigstens einen Reibelements (1, 2) repräsentiert oder beinhaltet, und/oder

b) ein erstes Beeinflussungssignal darstellt, welches an wenigstens eine Steuerung des Schienenfahrzeugs ausgegeben wird, welche die Traktion und/oder die Bremse des Schienenfahrzeugs steuert oder regelt, und durch welches die Fahrgeschwindigkeit (v) des Schienenfahrzeugs und/oder die Verzögerung (a) des Schienenfahrzeugs solange reduziert wird, bis die prädiktive Reibelement-Temperatur ($T_{pred}$) kleiner oder gleich in Bezug auf die erlaubte Reibelement-Maximaltemperatur ($T_{max}$) des wenigstens einen Reibelements (1, 2) ist.

13. Vorrichtung nach einem der Ansprüche 10 bis 12, **dadurch gekennzeichnet, dass** die Recheneinheit (7) ausgebildet ist, dass sie ein zweites Signal erzeugt, welches einen thermisch unkritischen Zustand des wenigstens einen Reibelements (1, 2) repräsentiert, falls sie feststellt, dass die prädiktive Reibelement-Temperatur ($T_{pred}$) kleiner oder gleich in Bezug auf die erlaubte Reibelement-Maximaltemperatur ($T_{max}$) des wenigstens einen Reibelements (1, 2) ist.

14. Vorrichtung nach einem der Ansprüche 10 bis 12, **dadurch gekennzeichnet, dass** das zweite Signal

a) ein Hinweissignal darstellt, welches über eine Ausgabeeinheit optisch und/oder akustisch ausgegeben wird und welches einen Hinweis dahingehend beinhaltet, dass die Geschwindigkeit des Schienenfahrzeugs aus thermischer Sicht beibehalten oder erhöht werden kann, und/oder

b) ein erstes Beeinflussungssignal darstellt, welches an wenigstens eine Steuerung des Schienenfahrzeugs ausgegeben wird, welche die Traktion und/oder die Bremse des Schienenfahrzeugs steuert oder regelt, und durch welches die Fahrgeschwindigkeit (v) des Schienenfahrzeugs und/oder die Verzögerung (a) des Schienenfahrzeugs solange erhöht wird, bis die prädiktive Reibelement-Temperatur ($T_{pred}$) gleich in Bezug auf die erlaubte Reibelement-Maximaltemperatur ($T_{max}$) des wenigstens einen Reibelements (1, 2) ist.

15. Vorrichtung nach einem der Ansprüche 10 bis 14, **dadurch gekennzeichnet, dass** die Recheneinheit (7) ausgebildet ist, dass sie ein drittes Signal erzeugt, welches einen thermisch kritischen Zustand des wenigstens einen Reibelements (1, 2) repräsentiert, falls sie feststellt, dass bereits der erste Temperaturanteil ($T_{current}$) der prädiktiven Reibelement-Temperatur ($T_{pred}$) alleine größer als die erlaubte Reibelement-Maximaltemperatur ($T_{max}$) des wenigstens einen Reibelements (1, 2) ist.

16. Vorrichtung nach Anspruch 15, **dadurch gekennzeichnet, dass** das dritte Signal

a) ein Warnsignal darstellt, welches über eine Ausgabeeinheit optisch und/oder akustisch ausgegeben wird und welches einen Hinweis auf den thermisch kritischen Zustand des wenigstens einen Reibelements (1, 2) repräsentiert oder beinhaltet, und/oder

b) ein drittes Beeinflussungssignal darstellt, welches an wenigstens eine Steuerung des Schienenfahrzeugs ausgegeben wird, welche die Traktion und/oder die Bremse des Schienenfahrzeugs steuert oder regelt, und durch welches die Fahrgeschwindigkeit (v) des Schienenfahrzeugs und/oder die Verzögerung (a) des Schienenfahrzeugs solange reduziert wird, bis der erste Temperaturanteil ($T_{current}$) kleiner oder gleich in Bezug auf die erlaubte Reibelement-Maximaltemperatur ($T_{max}$) des wenigstens einen Reibelements (1, 2) ist.

17. Vorrichtung nach einem der Ansprüche 10 bis 16, **dadurch gekennzeichnet, dass** der Parameter, welcher die aktuelle Fahrbetriebssituation charakterisiert, wenigstens einer der folgenden Parameter ist: Die aktuelle Geschwindigkeit des Schienenfahrzeugs, die aktuelle Bremskraft, das aktuelle Bremsmoment, der aktuelle Bremsdruck, die Umgebungstemperatur des Schienenfahrzeugs, die aktuelle Last und/oder Beladung des Schienenfahrzeugs, eine Steigung oder ein Gefälle der durch das Schienenfahrzeug befahrenen Strecke, eine Service-Bremsung oder eine Betriebs-Bremsung.

18. Vorrichtung nach einem der Ansprüche 10 bis 17, **dadurch gekennzeichnet, dass** das Reibelement (1, 2) eine Bremsscheibe und/oder einen Bremsbelag einer Scheibenbremse des Reibungsbremssystems, oder eine Radlauffläche und/oder einen Bremsklotz einer Klotzbremseinheit des Reibungsbremssystems beinhaltet.

19. Vorrichtung nach einem der Ansprüche 10 bis 18, **dadurch gekennzeichnet, dass** der Parameter, welcher die aktuelle Fahrbetriebssituation charakterisiert, wenigstens einer der folgenden Parameter ist: Die aktuelle Geschwindigkeit des Schienenfahrzeugs, die aktuelle Bremskraft, das aktuelle Bremsmoment, der aktuelle Bremsdruck, die Umgebungstemperatur des Schienenfahrzeugs, die aktuelle Last und/oder Beladung des Schienenfahrzeugs, eine Steigung oder ein Gefälle der durch das Schienenfahrzeug befahrenen Strecke, eine Service-Bremsung oder eine Betriebs-Bremsung.

20. Vorrichtung nach einem der Ansprüche 10 bis 19, **dadurch gekennzeichnet, dass** das Schienenfahrzeug mehrere Reibungsbremsen mit jeweils wenigstens einem Reibelement (1, 2) umfasst, und dass für jede der mehreren Reibungsbremsen jeweils ein temperaturabhängiges Fahrverhalten wie oben beschrieben ermittelt wird, dieses aber auf zugweiter Ebene über alle Reibungsbremsen hinweg konsolidiert und die konsolidierte Fahranweisung an den Triebwagenführer oder an ein Zugsteuersystem weitergereicht wird.

21. Schienenfahrzeug mit einer Vorrichtung nach einem der Ansprüche 10 bis 20.

**Claims**

1. A method for monitoring and influencing the thermal state of a friction brake system of a rail vehicle dependent on a calculated or estimated predictive friction element temperature ($T_{pred}$) of at least one friction element (1, 2) of the friction brake system, including at least the following steps:

   a) detecting at least one parameter which characterizes a current operating situation of the rail vehicle,

   b) calculating, estimating or determining a first temperature component ($T_{current}$) of the predictive friction element temperature ($T_{pred}$) on the basis of the current operating situation of the rail vehicle and taking the first temperature component ($T_{current}$) into consideration when monitoring and influencing the thermal state of the friction brake system, **characterized in that**

   c) the monitoring and influencing of the thermal state of the friction brake system additionally takes into consideration a second temperature component (dT) of the predictive friction element temperature ($T_{pred}$), which would be obtained in addition to the first temperature component ($T_{current}$) at the at least one friction element (1, 2) on the assumption that, in the current operating situation of the rail vehicle, braking with a defined type of braking is notionally or theoretically carried out, and **in that**

   d) the predictive friction element temperature ($T_{pred}$) of the at least one friction element (1, 2) is determined as the sum of the first temperature component ($T_{current}$) and the second temperature component (dT), and **in that**

   e) if the predictive friction element temperature ($T_{pred}$) is greater than the allowed friction element maximum temperature ($T_{max}$) of the at least one friction element (1, 2), a first signal is generated, representing a potentially thermally critical state of the at least one friction element (1, 2), and otherwise a first signal is not generated.

2. The method as claimed in claim 1, **characterized in that** the defined type of braking comprises at least one of the following types of braking: emergency braking, forced braking, rapid braking, hazard braking.

3. The method as claimed in one of the preceding claims, **characterized in that** the first signal

   a) represents a warning signal, which is optically and/or acoustically output by way of an output unit and which represents or comprises an indication of the potentially thermally critical state of the at least one friction element (1, 2), and/or

   b) represents a first influencing signal, which is output to at least one controller of the rail vehicle, which controls the traction and/or the brake of the rail vehicle in an open-loop or closed-loop manner, and by which the running speed (v) of the rail vehicle and/or the deceleration (a) of the rail vehicle is reduced until the predictive friction element temperature ($T_{pred}$) is less than or equal to the allowed friction element maximum temperature ($T_{max}$) of the at least one friction element (1, 2).

4. The method as claimed in one of the preceding claims, **characterized in that,** if the predictive friction element temperature ($T_{pred}$) is less than the allowed friction element maximum temperature ($T_{max}$) of the at least one friction element (1, 2), a second signal is generated, representing a thermally uncritical state of the at least one friction element (1, 2).

5. The method as claimed in one of the preceding claims, **characterized in that** the second signal

   c) represents an indicating signal, which is optically and/or acoustically output by way of an output unit and which comprises an indication to the effect that a current speed of the rail vehicle can be maintained or increased from a thermal perspective, and/or

d) represents a second influencing signal, which is output to at least one controller of the rail vehicle, which controls the traction and/or the brake of the rail vehicle in an open-loop or closed-loop manner, and by which the running speed (v) of the rail vehicle and/or the deceleration (a) of the rail vehicle is increased until the predictive friction element temperature ($T_{pred}$) is equal to the allowed friction element maximum temperature ($T_{max}$) of the at least one friction element (1, 2).

6. The method as claimed in one of the preceding claims, **characterized in that,** if the first temperature component ($T_{current}$) of the predictive friction element temperature ($T_{pred}$) alone is already greater than the allowed friction element maximum temperature ($T_{max}$) of the at least one friction element (1, 2), a third signal is generated, representing a thermally critical state of the at least one friction element (1, 2).

7. The method as claimed in claim 6, **characterized in that** the third signal

a) represents a warning signal, which is optically and/or acoustically output by way of an output unit and which represents or comprises an indication of the thermally critical state of the at least one friction element (1, 2), and/or
b) represents a third influencing signal, which is output to at least one controller of the rail vehicle, which controls the traction and/or the brake of the rail vehicle in an open-loop or closed-loop manner, and by which the running speed (v) of the rail vehicle and/or the deceleration (a) of the rail vehicle is reduced until the first temperature component ($T_{current}$) is less than or equal to the allowed friction element maximum temperature ($T_{max}$) of the at least one friction element (1, 2).

8. The method as claimed in one of the preceding claims, **characterized in that** the parameter that characterizes the current operating situation is at least one of the following parameters: the current speed of the rail vehicle, the current braking force, the current braking torque, the current braking pressure, the ambient temperature of the rail vehicle, the current load and/or loading of the rail vehicle, an incline or a gradient of the section of track being run over by the rail vehicle, service braking or normal application of the brakes.

9. The method as claimed in one of the preceding claims, **characterized in that** the friction element (1, 2) comprises a brake disk and/or a brake lining of a disk brake of the friction brake system, or a wheel running surface and/or a brake shoe of a shoe braking unit of the friction brake system.

10. A device for monitoring and influencing the thermal state of a friction brake system of a rail vehicle dependent on a predictive friction element temperature ($T_{pred}$) of at least one friction element (1, 2) of the friction brake system at least partially calculated or estimated by means of a model, the device comprising at least the following:

a) detecting means (10, 11, 12, 13), which are designed for detecting at least one parameter which characterizes a current operating situation of the rail vehicle,
b) a computing unit (7), which is designed for monitoring and influencing the thermal state of the friction brake system and in which the model is implemented, and wherein
c) the detecting means (10, 11, 12, 13) enter the at least one parameter into the computing unit (7), and wherein
d1) the model carries out calculations in such a way that it calculates or estimates a first temperature component ($T_{current}$) of the predictive friction element temperature ($T_{pred}$) on the basis of the at least one parameter, or wherein
d2) the detecting means (10, 11, 12, 13) is designed so as to detect the first temperature component ($T_{current}$) of the predictive friction element temperature ($T_{pred}$) and enter it into the model, and wherein
e) the computing unit (7) is designed so as to take the first temperature component ($T_{current}$) into consideration when monitoring and influencing the thermal state of the friction brake system, **characterized in that**
f) the model also carries out calculations in such a way that the monitoring and influencing of the thermal state of the friction brake system additionally takes into consideration a second temperature component (dT) of the predictive friction element temperature ($T_{pred}$), which the model calculates or estimates, and which would be obtained in addition to the first temperature component ($T_{current}$) at the at least one friction element (1, 2) on the assumption that, in the current operating situation of the rail vehicle, braking with a defined type of braking is notionally or theoretically carried out, and wherein
g) the model also carries out calculations in such a way that the predictive friction element temperature ($T_{pred}$) of the at least one friction element (1, 2) is determined as the sum of the first temperature component ($T_{current}$) and the second temperature component (dT), and **in that**
h) the computing unit (7) is designed so as to generate, on the basis of the calculations of the model, a first signal, representing a potentially thermally critical state of the at least one friction element (1, 2), if it is established by the model that the predictive friction element temperature ($T_{pred}$) is greater than the allowed friction element maximum temperature ($T_{max}$) of the at least one friction element (1, 2), and otherwise a first signal is not generated.

11. The device as claimed in claim 10, **characterized in that** the defined type of braking comprises at least one of the following types of braking: emergency braking, forced braking, rapid braking, hazard braking.

12. The device as claimed in either of claims 10 and 11, **characterized in that** the first signal

    a) represents a warning signal, which is optically and/or acoustically output by way of an output unit and which represents or comprises an indication of the potentially thermally critical state of the at least one friction element (1, 2), and/or
    b) represents a first influencing signal, which is output to at least one controller of the rail vehicle, which controls the traction and/or the brake of the rail vehicle in an open-loop or closed-loop manner, and by which the running speed (v) of the rail vehicle and/or the deceleration (a) of the rail vehicle is reduced until the predictive friction element temperature ($T_{pred}$) is less than or equal to the allowed friction element maximum temperature ($T_{max}$) of the at least one friction element (1, 2).

13. The device as claimed in one of claims 10 to 12, **characterized in that** the computing unit (7) is designed so as to generate a second signal, representing a thermally uncritical state of the at least one friction element (1, 2), if it establishes that the predictive friction element temperature ($T_{pred}$) is less than or equal to the allowed friction element maximum temperature ($T_{max}$) of the at least one friction element (1, 2).

14. The device as claimed in one of claims 10 to 12, **characterized in that** the second signal

    a) represents an indicating signal, which is optically and/or acoustically output by way of an output unit and which comprises an indication to the effect that the speed of the rail vehicle can be maintained or increased from a thermal perspective, and/or
    b) represents a first influencing signal, which is output to at least one controller of the rail vehicle, which controls the traction and/or the brake of the rail vehicle in an open-loop or closed-loop manner, and by which the running speed (v) of the rail vehicle and/or the deceleration (a) of the rail vehicle is increased until the predictive friction element temperature ($T_{pred}$) is equal to the allowed friction element maximum temperature ($T_{max}$) of the at least one friction element (1, 2).

15. The device as claimed in one of claims 10 to 14, **characterized in that** the computing unit (7) is designed so as to generate a third signal, representing a thermally critical state of the at least one friction element (1, 2), if it establishes that the first temperature component ($T_{current}$) of the predictive friction element temperature ($T_{pred}$) alone is already greater than the allowed friction element maximum temperature ($T_{max}$) of the at least one friction element (1, 2).

16. The device as claimed in claim 15, **characterized in that** the third signal a) represents a warning signal, which is optically and/or acoustically output by way of an output unit and which represents or comprises an indication of the thermally critical state of the at least one friction element (1, 2), and/or b) represents a third influencing signal, which is output to at least one controller of the rail vehicle, which controls the traction and/or the brake of the rail vehicle in an open-loop or closed-loop manner, and by which the running speed (v) of the rail vehicle and/or the deceleration (a) of the rail vehicle is reduced until the first temperature component ($T_{current}$) is less than or equal to the allowed friction element maximum temperature ($T_{max}$) of the at least one friction element (1, 2).

17. The device as claimed in one of claims 10 to 16, **characterized in that** the parameter that characterizes the current operating situation is at least one of the following parameters: the current speed of the rail vehicle, the current braking force, the current braking torque, the current braking pressure, the ambient temperature of the rail vehicle, the current load and/or loading of the rail vehicle, an incline or a gradient of the section of track being run over by the rail vehicle, service braking or normal application of the brakes.

18. The device as claimed in one of claims 10 to 17, **characterized in that** the friction element (1, 2) comprises a brake disk and/or a brake lining of a disk brake of the friction brake system, or a wheel running surface and/or a brake shoe of a shoe braking unit of the friction brake system.

19. The device as claimed in one of claims 10 to 18, **characterized in that** the parameter that characterizes the current operating situation is at least one of the following parameters: the current speed of the rail vehicle, the current braking force, the current braking torque, the current braking pressure, the ambient temperature of the rail vehicle, the current load and/or loading of the rail vehicle, an incline or a gradient of the section of track being run over by the rail vehicle, service braking or normal application of the brakes.

20. The device as claimed in one of claims 10 to 19, **characterized in that** the rail vehicle comprises multiple friction brakes each with at least one friction element (1, 2), and **in that** a temperature-dependent running behavior is respectively ascertained as described above for each of the multiple friction brakes, but is consolidated over all the friction brakes on a train-wide level and the consolidated running instruction is passed on to the driver of the tractive unit or to a train control system.

21. A rail vehicle with a device as claimed in one of claims 10 to 20.

**Revendications**

1. Procédé de surveillance et d'influence de l'état thermique d'un système de frein à friction d'un véhicule ferroviaire en fonction d'une température prédictive ($T_{pred}$) d'élément de friction calculée ou estimée au moins d'un élément de friction (1, 2) du système de frein à friction, contenant au moins les étapes suivantes :

   a) la détection d'au moins un paramètre qui caractérise une situation opérationnelle actuelle du véhicule ferroviaire,
   b) le calcul, l'estimation ou la détermination d'une première composante de température ($T_{current}$) de la température prédictive ($T_{pred}$) d'élément de friction sur la base de la situation opérationnelle actuelle du véhicule ferroviaire et la prise en considération de la première composante de température ($T_{current}$) lors de la surveillance et de l'influence de l'état thermique du système de frein à friction, **caractérisé en ce** que
   c) lors de la surveillance et de l'influence de l'état thermique du système de frein à friction, une seconde composante de température (dT) de la température prédictive d'élément de friction ($T_{pred}$) est en plus prise en considération, composante qui se réglerait en plus de la première composante de température ($T_{current}$) au niveau de l'au moins un élément de friction (1, 2) en supposant qu'un freinage avec un type de frein défini est réalisé de manière fictive ou théorique dans la situation opérationnelle actuelle du véhicule ferroviaire, et en ce que
   d) la température prédictive ($T_{pred}$) d'élément de friction de l'au moins un élément de friction (1, 2) est déterminée comme somme de la première composante de température ($T_{current}$) et de la seconde composante de température (dT), et en ce que
   e) si la température prédictive ($T_{pred}$) d'élément de friction est supérieure à la température maximale ($T_{max}$) d'élément de friction permise de l'au moins un élément de friction (1, 2), un premier signal est généré, lequel représente un état critique thermique potentiel de l'au moins un élément de friction (1, 2), et sinon aucun premier signal n'est généré.

2. Procédé selon la revendication 1, **caractérisé** en ce que le type de frein défini comprend au moins l'un des types de frein suivants : un freinage d'urgence, un freinage forcé, un freinage rapide, un freinage dangereux.

3. Procédé selon l'une quelconque des revendications précédentes, **caractérisé en ce que** le premier signal

   c) constitue un signal d'avertissement qui est émis par voie optique et/ou acoustique par le biais d'une unité de sortie et qui représente ou contient une indication de l'état critique thermique potentiel de l'au moins un élément de friction (1, 2), et/ou
   d) constitue un premier signal d'influence qui est transmis à au moins un dispositif de commande du véhicule ferroviaire qui commande ou régule la traction et/ou le freinage du véhicule ferroviaire, et par lequel la vitesse opérationnelle (v) du véhicule ferroviaire et/ou le ralentissement (a) du véhicule ferroviaire est réduit jusqu'à ce que la température prédictive ($T_{pred}$) d'élément de friction soit inférieure ou égale à la température maximale ($T_{max}$) d'élément de friction permise de l'au moins un élément de friction (1, 2).

4. Procédé selon l'une quelconque des revendications précédentes, **caractérisé en ce que** si la température prédictive ($T_{pred}$) d'élément de friction est inférieure à la température maximale ($T_{max}$) d'élément de friction permise de l'au moins un élément de friction (1, 2), un deuxième signal est généré, lequel représente un état non critique thermique de l'au moins un élément de friction (1, 2).

**5.** Procédé selon l'une quelconque des revendications précédentes, **caractérisé en ce que** le deuxième signal

c) constitue un signal d'indication qui est émis de manière optique et/ou acoustique par le biais d'une unité de sortie et qui contient une indication en ce sens qu'une vitesse actuelle du véhicule ferroviaire peut être maintenue ou augmentée d'un point de vue thermique, et/ou
d) constitue un second signal d'influence qui est transmis à au moins un dispositif de commande du véhicule ferroviaire qui commande ou régule la traction et/ou le freinage du véhicule ferroviaire, et par lequel la vitesse opérationnelle (v) du véhicule ferroviaire et/ou le ralentissement (a) du véhicule ferroviaire est augmenté jusqu'à ce que la température prédictive ($T_{pred}$) d'élément de friction soit égale à la température maximale ($T_{max}$) d'élément de friction permise de l'au moins un élément de friction (1, 2).

**6.** Procédé selon l'une quelconque des revendications précédentes, **caractérisé en ce que** si la première composante de température ($T_{current}$) de la température prédictive ($T_{pred}$) d'élément de friction seule est supérieure à la température maximale ($T_{max}$) d'élément de friction permise de l'au moins un élément de friction (1, 2), un troisième signal est généré, lequel représente un état critique thermique de l'au moins un élément de friction (1, 2).

**7.** Procédé selon la revendication 6, **caractérisé en ce que** le troisième signal

a) constitue un signal d'avertissement qui est émis par voie optique et/ou acoustique par le biais d'une unité de sortie et qui représente ou contient une indication de l'état critique thermique de l'au moins un élément de friction (1, 2), et/ou
b) constitue un troisième signal d'influence qui est transmis à au moins un dispositif de commande du véhicule ferroviaire qui commande ou régule la traction et/ou le freinage du véhicule ferroviaire, et par lequel la vitesse opérationnelle (v) du véhicule ferroviaire et/ou le ralentissement (a) du véhicule ferroviaire est réduit jusqu'à ce que la première composante de température ($T_{current}$) soit inférieure ou égale à la température maximale ($T_{max}$) d'élément de friction permise de l'au moins un élément de friction (1, 2).

**8.** Procédé selon l'une quelconque des revendications précédentes, **caractérisé en ce que** le paramètre qui caractérise la situation opérationnelle actuelle, est au moins l'un des paramètres suivants : la vitesse actuelle du véhicule ferroviaire, la force de freinage actuelle, le couple de freinage actuel, la pression de freinage actuelle, la température ambiante du véhicule ferroviaire, la charge et/ou le chargement actuel du véhicule ferroviaire, une pente ou une inclinaison du trajet parcouru par le véhicule ferroviaire, un freinage de service ou un freinage de fonctionnement.

**9.** Procédé selon l'une quelconque des revendications précédentes, **caractérisé en ce que** l'élément de friction (1, 2) contient un disque de frein et/ou une garniture de frein d'un frein à disque du système de frein à friction ou une surface de roulement de roue et/ou un sabot de frein d'une unité de frein à sabot du système de frein à friction.

**10.** Dispositif de surveillance et d'influence de l'état thermique d'un système de frein à friction d'un véhicule ferroviaire en fonction d'une température prédictive ($T_{pred}$) d'élément de friction calculée ou estimée au moins partiellement au moyen d'un modèle au moins d'un élément de friction (1, 2) du système de frein à friction, qui comprend au moins les étapes suivantes :

a) des moyens de détection (10, 11, 12, 13) qui sont configurés pour la détection d'au moins un paramètre qui caractérise une situation opérationnelle actuelle du véhicule ferroviaire,
b) une unité de calcul (7) qui est configurée pour la surveillance et l'influence de l'état thermique du système de frein à friction et dans lequel le modèle est mis en œuvre et dans lequel
c) les moyens de détection (10, 11, 12, 13) régulent le au moins un paramètre dans l'unité de calcul (7), et dans lequel

d1) le modèle réalise des calculs de telle manière qu'il calcule ou estime une première composante de température ($T_{current}$) de la température prédictive ($T_{pred}$) d'élément de friction sur la base de l'au moins un paramètre, ou dans lequel
d2) les moyens de détection (10, 11, 12, 13) sont configurés de sorte qu'ils détectent la première composante de température ($T_{current}$) de la température prédictive ($T_{pred}$) d'élément de friction et la régule dans le modèle, et dans lequel

e) l'unité de calcul (7) est configurée de sorte qu'elle prenne en considération la première composante de température $T_{current}$ lors de la surveillance et l'influence de l'état thermique du système de frein à friction, **caractérisé en ce** que

c) le modèle réalise en outre des calculs de telle manière que, lors de la surveillance et de l'influence de l'état thermique du système de frein à friction, une seconde composante de température (dT) de la température prédictive ($T_{pred}$) d'élément de friction est en plus prise en considération, composante que le modèle calcule ou estime et qui se réglerait en plus de la première composante de température ($T_{current}$) au niveau de l'au moins un élément de friction (1, 2) en supposant qu'un freinage avec un type de frein défini est réalisé de manière fictive ou théorique dans la situation opérationnelle actuelle du véhicule ferroviaire, et dans lequel

g) le modèle réalise en outre des calculs de telle manière que la température prédictive ($T_{pred}$) d'élément de friction de l'au moins un élément de friction (1, 2) est déterminée comme somme de la première composante de température ($T_{current}$) et de la seconde composante de température (dT), et en ce que

h) l'unité de calcul (7) est configurée de sorte qu'elle génère sur la base des calculs du modèle un premier signal qui représente un état critique thermique potentiel de l'au moins un élément de friction (1, 2) s'il est constaté par le modèle que la température prédictive ($T_{pred}$) d'élément de friction est supérieure à la température maximale ($T_{max}$) d'élément de friction permise de l'au moins un élément de friction (1, 2), et sinon aucun premier signal n'est généré.

11. Dispositif selon la revendication 10, **caractérisé** en ce que le type de frein défini comprend au moins l'un des types de frein suivants : un freinage d'urgence, un freinage forcé, un freinage rapide, un freinage dangereux.

12. Dispositif selon l'une quelconque des revendications 10 ou 11, **caractérisé en ce que** le premier signal

a) constitue un signal d'avertissement qui est émis par voie optique et/ou acoustique par le biais d'une unité de sortie et qui représente ou contient une indication de l'état critique thermique potentiel de l'au moins un élément de friction (1, 2), et/ou

b) constitue un premier signal d'influence qui est transmis à au moins un dispositif de commande du véhicule ferroviaire qui commande ou régule la traction et/ou le freinage du véhicule ferroviaire, et par lequel la vitesse opérationnelle (v) du véhicule ferroviaire et/ou le ralentissement (a) du véhicule ferroviaire est réduit jusqu'à ce que la température prédictive ($T_{pred}$) d'élément de friction soit inférieure ou égale à la température maximale ($T_{max}$) d'élément de friction permise de l'au moins un élément de friction (1, 2).

13. Dispositif selon l'une quelconque des revendications 10 à 12, **caractérisé en ce que** l'unité de calcul (7) est configurée de sorte qu'elle génère un deuxième signal qui représente un état non critique thermique de l'au moins un élément de friction (1, 2) si elle constate que la température prédictive ($T_{pred}$) d'élément de friction est inférieure ou égale à la température maximale ($T_{max}$) d'élément de friction permise de l'au moins un élément de friction (1, 2).

14. Dispositif selon l'une quelconque des revendications 10 à 12, **caractérisé en ce que** le deuxième signal

a) constitue un signal d'indication qui est émis de manière optique et/ou acoustique par le biais d'une unité de sortie et qui contient une indication en ce sens que la vitesse du véhicule ferroviaire peut être maintenue ou augmentée d'un point de vue thermique, et/ou

b) constitue un premier signal d'influence qui est transmis à au moins un dispositid de commande du véhicule ferroviaire qui commande ou régule la traction et/ou le freinage du véhicule ferroviaire, et par lequel la vitesse opérationnelle (v) du véhicule ferroviaire et/ou le ralentissement (a) du véhicule ferroviaire est augmenté jusqu'à ce que la température prédictive ($T_{pred}$) d'élément de friction soit égale à la température maximale ($T_{max}$) d'élément de friction permise de l'au moins un élément de friction (1, 2).

15. Dispositif selon l'une quelconque des revendications 10 à 14, **caractérisé en** ce que l'unité de calcul (7) est configurée de sorte qu'elle génère un troisième signal qui représente un état critique thermique de l'au moins un élément de friction (1, 2) si elle constate que la première composante de température ($T_{current}$) de la température prédictive d'élément de friction ($T_{pred}$) seule est déjà supérieure à la température maximale ($T_{max}$) d'élément de friction permise de l'au moins un élément de friction (1, 2).

16. Dispositif selon la revendication 15, **caractérisé en ce que** le troisième signal

a) constitue un signal d'avertissement qui est émis par voie optique et/ou acoustique par le biais d'une unité de sortie et qui représente ou contient une indication de l'état critique thermique de l'au moins un élément de friction (1, 2), et/ou

b) constitue un troisième signal d'influence qui est transmis à au moins un dispositif de commande du véhicule ferroviaire qui commande ou régule la traction et/ou le freinage du véhicule ferroviaire, et par lequel la vitesse opérationnelle (v) du véhicule ferroviaire et/ou le ralentissement (a) du véhicule ferroviaire est réduit jusqu'à ce que la première composante de température ($T_{current}$) soit inférieure ou égale à la température maximale ($T_{max}$) d'élément de friction permise de l'au moins un élément de friction (1, 2).

17. Dispositif selon l'une quelconque des revendications 10 à 16, **caractérisé en ce**que le paramètre qui caractérise la situation opérationnelle actuelle, est au moins l'un des paramètres suivants : la vitesse actuelle du véhicule ferroviaire, la force de freinage actuelle, le couple de freinage actuel, la pression de freinage actuelle, la température ambiante du véhicule ferroviaire, la charge et/ou le chargement actuel du véhicule ferroviaire, une pente ou une inclinaison de la voie parcourue par le véhicule ferroviaire, un freinage de service ou un freinage de fonctionnement.

18. Dispositif selon l'une quelconque des revendications 10 à 17, **caractérisé en ce**que l'élément de friction (1, 2) contient un disque de frein et/ou une garniture de frein d'un frein à disque du système de frein à friction ou une surface de roulement de roue et/ou un sabot de frein d'une unité de frein à sabot du système de frein à friction.

19. Dispositif selon l'une quelconque des revendications 10 à 18, **caractérisé en ce**que le paramètre qui caractérise la situation opérationnelle actuelle, est au moins l'un des paramètres suivants : la vitesse actuelle du véhicule ferroviaire, la force de freinage actuelle, le couple de freinage actuel, la pression de freinage actuelle, la température ambiante du véhicule ferroviaire, la charge et/ou le chargement actuel du véhicule ferroviaire, une pente ou une inclinaison de la voie parcourue par le véhicule ferroviaire, un freinage de service ou un freinage de fonctionnement.

20. Dispositif selon l'une quelconque des revendications 10 à 19, **caractérisé en ce**que le véhicule ferroviaire comprend plusieurs freins à friction avec respectivement au moins un élément de friction (1, 2), et en ce que pour chacun des plusieurs freins à friction, respectivement un comportement opérationnelle dépendant de la température est déterminé comme décrit plus haut mais celui-ci est consolidé au niveau de l'ensemble du train sur tous les freins à friction, et les instructions de conduite consolidées sont transmises au conducteur de wagons ou au système de commande de train.

21. Véhicule ferroviaire avec un dispositif selon l'une quelconque des revendications 10 à 20.

FIG.1

FIG.2

Aktuelle Fahrbetriebssituation

Bremskraft FB
Fahrgeschwindigkeit v
Umgebungstemperatur Tu
Konfigurationsdaten
Zeit t (Zeitstempel)
Masse m

100

200

Berechnen oder
Schätzen oder Messen von T_current

300

T_current >
T_max?

Ja

Alarm

Anzeigeeinheit

Nein

400

Berechnen oder Schätzen des Temperaturhubs dT für eine fiktive Bremsung in der aktuellen Fahrsituation mit
einer bestimmten Bremsart

FIG.3A

500

T pred = T current + dT

600

T_pred > T_max?

Ja → Warnung ------> Anzeigeeinheit

Ja → Regeleinheit

Nein

700

T pred < T max?

Ja ------> Regeleinheit

Nein

800

T_pred = T_max: Aus thermischer Sicht optimale Situation

FIG.3B

FIG.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009074265 A1
- WO 2018054736 A1